# EUROPÄISCHE PATENTSCHRIFT

(11) **EP 3 195 556 B1**
(45) Veröffentlichungstag und Bekanntmachung des Hinweises auf die Patenterteilung: **26.06.2019**
(21) Anmeldenummer: 15771531.9
(22) Anmeldetag: 15.09.2015
(51) Int. Cl.: G06F 11/10, G06F 16/182, H04L 29/06, G06F 21/33, G06F 21/60, G06F 21/62, H04L 29/08, H04L 9/08, H04L 9/32

(54) **VERTEILTE DATENSPEICHERUNG MITTELS BERECHTIGUNGSTOKEN**
DISTRIBUTED DATA STORAGE BY MEANS OF AUTHORISATION TOKEN
STOCKAGE DE DONNÉES DISTRIBUÉ UTILISANT DES JETONS D'AUTORISATION

(30) Priorität: 17.09.2014 DE 102014113430
(43) Veröffentlichungstag der Anmeldung: 26.07.2017
(73) Patentinhaber: Bundesdruckerei GmbH, 10969 Berlin (DE)
(72) Erfinder: SCHNJAKIN, Maxim, 10439 Berlin (DE); BERGER, Philipp, 10627 Berlin (DE); GRAUPNER, Hendrik, 14050 Berlin (DE)
(74) Vertreter: Richardt Patentanwälte PartG mbB
(86) Internationale Anmeldenummer: PCT/EP2015/071026
(87) Internationale Veröffentlichungsnummer: WO 2016/041928

(56) Entgegenhaltungen:
- WO-A1-2011/033174
- US-A1- 2013 304 711

## Beschreibung

Die Erfindung betrifft ein Verfahren zum Speichern von Daten, ein Computerprogrammprodukt, einen Dateimanagementserver und ein Nutzer-Computersystem.

Aus dem Stand der Technik sind verschiedene Verfahren zur Speicherung von Nutzerdaten mittels eines oder mehrerer externer Speicherdienste bekannt, z.B. "OneDrive", "Dropbox", "Google Drive" und andere. Dabei unterscheiden sich die Speicherdienste im Hinblick auf die Sicherheit der dort gespeicherten Daten (unterschiedliche Authentifizierungs- und Verschlüsselungsverfahren), im Hinblick auf den Preis, im Hinblick auf die Datenverfügbarkeit und/oder im Hinblick auf andere Faktoren. Teilweise bieten die Speicherdienste auch verschiedene Nutzungsverträge mit unterschiedlichem Leistungsumfang an die sich nach einiger Zeit auch ändern können. Aufgrund des Aufwands und der Kosten, die mit einer Registrierung bei jedem einzelnen Speicherdienste verbunden sind, wird oftmals nur ein einziger Dienst genutzt, um Daten extern zu speichern, z.B. für Backup-Zwecke.

US Patentanmeldung US 2013/0304711 A1 beschreibt ein Verfahren, wonach ein Verarbeitungsmodul in Antwort auf eine Lesebefehl eine Anzahl an Lesekommandos bezüglich einer Menge codierter Daten-Teilmengen ausgibt und eine entsprechende Menge an kodierten Daten-Teilmengen empfängt. Das Verarbeitungsmodul wählt eine bestimmte Kombination von kodierten Daten-Teilmengen aus, decodiert diese und erzeugt ein wiederhergestelltes Datensegment. Das Verarbeitungsmodul überprüft einen Integritätswert für das wiederhergestellte Datensegment und zeigt an ob die bestimmte kombinationsvalide ist. Das verifizierte, wiederhergestellte Datensegment wird von dem Verarbeitungsmodul als Antwort auf das Lesekommando verwendet.

Der Erfindung liegt demgegenüber die Aufgabe zugrunde, ein verbessertes Verfahren zur Speicherung von Daten zu schaffen, sowie ein entsprechendes Computerprogrammprodukt, ein Nutzer-Computersystem und einen Dateimanagementserver.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Erfindungsgemäß wird ein Verfahren zur Speicherung von Daten bereitgestellt. Das Verfahren umfasst, um eine Datei zu speichern:
- automatische Generierung eines Verteilungsplans, der Instruktionen zur Generierung von Dateifragmenten der Datei mittels eines Fehlerkorrekturverfahrens und Identifikatoren von mehreren Speicherdiensten, in deren nichtflüchtigen Speichermedien die generierten Dateifragmente gespeichert werden sollen, enthält, durch einen Dateimanagementserver oder durch ein Nutzer-Computersystem;
- Durchführung des in dem Verteilungsplan spezifizierten Fehlerkorrekturverfahrens zur Generierung der Dateifragmente aus der Datei durch das Nutzer-Computersystem, wobei die Dateifragmente Fehlerkorrektur-Bits beinhalten;
- Senden einer Berechtigungsanfrage des Nutzer-Computersystems zum Speichern der Dateifragmente in den im Verteilungsplan identifizierten Speicherdiensten an den Dateimanagementserver über ein Netzwerk;
- In Antwort auf einen Empfang der gesendeten Berechtigungsanfrage, Anforderung eines Berechtigungstokens durch den Dateimanagementserver von jedem der in dem Verteilungsplan identifizierten Speicherdienste und Weiterleitung der in Antwort auf die Anforderung erhaltenen Berechtigungstoken durch den Dateimanagementserver an das Nutzer-Computersystem; und
- Speicherung der generierten Dateifragmente über das Netzwerk in den Speichermedien der identifizierten Speicherdienste mittels Berechtigungsnachweis durch die Berechtigungstoken unter Umgehung des Dateimanagementservers durch das Nutzer-Computersystem;
wobei Metadaten, die die Rekonstruktion der Datei aus den Dateifragmenten erlauben, in dem Nutzer-Computersystem und/oder dem Dateimanagementserver gespeichert werden und gegen einen Zugriff der Speicherdienste gesichert sind.

Dieses Verfahren kann vorteilhaft sein, da die Speicherung von mittels eines Fehlerkorrekturverfahrens erzeugten Dateifragmenten in verschiedenen Speicherdiensten die Verfügbarkeit der zu speichernden Daten erhöhen kann. Außerdem kann dadurch auch die Sicherheit der Daten vor einem unberechtigten Zugriff durch den Speicherdienst erhöht werden: Fehlerkorrekturverfahren generieren Dateifragmente, die Korrekturbits enthalten und somit, je nach Anteil der Korrekturbits in den Fragmenten und je nach der Anzahl der generierten Dateifragmente, eine Rekonstruktion der ursprünglichen Datei erlauben, sollte einer oder mehrere der Speicherdienste temporär oder permanent ausfallen. Jedoch kann keiner der Speicherdienste die Daten rekonstruieren, selbst wenn der Speicherdienst eine etwaige Verschlüsselung der Dateifragmente "knacken" sollte, da kein Speicherdienst sämtliche Dateifragmente erhält. Die Sicherheit durch unberechtigten Zugriff durch den Betreiber des Speicherdienst kann in synergistischer Weise dadurch erhöht werden, dass eine strikte Trennung des Zugriffsmanagements durch den Dateimanagementserver in Form der Anforderung der Berechtigungstoken und deren Weiterleitung einerseits und dem Datenmanagement durch die einzelnen Speicherdienste andererseits erfolgt: die Dateifragmente werden unter Umgehung des Dateimanagementservers von dem Nutzersystem direkt in den Speicherdiensten gespeichert. Der Dateimanagementserver agiert also nicht als Router, sondern vermittelt lediglich die Berechtigungstoken, welche dem Nutzer-Computersystem die Speicherung der Dateifragmente über die Speicherdienste erlaubt. Der Dateimanagementserver hat also keinen Zugriff auf den Inhalt der übertragenen Dateifragmente. Die Speicherdienste wiederum verfügen nicht über die Metadaten, die zur Rekonstruktion der Datei benötigt werden. Diese Metadaten sind lediglich dem Nutzer-Computersystem und/oder dem Dateimanagementserver zugänglich. Zudem kann das Verfahren deutlich schneller extern speichern als herkömmliche Verfahren: um zumindest eine Sicherheitskopie einer Datei extern verfügbar zu haben, musste bisher eine Kopie dieser Datei an einen externen Speicherdienst übertragen werden. Im Falle eines Ausfalls dieses externen Dienstes war die Sicherheitskopie verloren oder zumindest temporär nicht mehr verfügbar. Erfindungsgemäß werden aber Dateifragmente mittels mehrerer Speicherdienste gespeichert. Dies ermöglicht die parallele Übertragung der Dateifragmente über das Netzwerk. Bei paralleler Übertragung der Dateifragmente kann der gesamte Informationsgehalt der Datei einschließlich der Fehlerkorrekturbits innerhalb eines Bruchteils der Zeit erfolgen, die zur Übertragung einer ganzen Dateikopie an einen einzelnen Speicherdienst notwendig wäre. Zudem ist die Datei dank der Fehlerkorrekturbits nicht verloren, sollte einer der Speicherdienste ausfallen, sondern kann sofort und automatisch aus den übrigen Dateifragmenten mit den Fehlerkorrekturbits und den Metadaten rekonstruiert werden. Dies kann insbesondere für Dateien relevant sein, die hochverfügbar sein müssen, da z.B. diese für die Arbeitsfähigkeit eines Unternehmens erforderlich sind. Der Umstand, dass der Verteilungsplan für die Datei generiert wird, kann eine feingranulare und für die jeweilige Datei optimierte Generierung des Verteilungsplans ermöglichen.

Nach Ausführungsformen ist das Nutzer-Computersystem einem Nutzer zugeordnet. Der Dateimanagementserver führt eine Berechtigungsprüfung durch und fordert die Berechtigungstokens nur dann von jedem der in dem Verteilungsplan identifizierten Speicherdienste an falls die Berechtigungsprüfung ergab dass der Nutzer zum Speichern der Datei berechtigt ist.

Nach Ausführungsformen werden die generierten Dateifragmente parallel über das Netzwerk an die identifizierten Speicherdienste zu Speicherung übertragen. Dies kann die Geschwindigkeit der Speicherung der Datei erhöhen.

Nach manchen Ausführungsformen wird der Verteilungsplan durch das Nutzercomputersystem, zum Beispiel eine Client-Applikation, die auf dem Nutzer-Computersystem installiert ist, generiert. Nach anderen Ausführungsformen wird der Verteilungsplan durch den Dateimanagementserver generiert und an das Nutzer-Computersystem übertragen.

Nach manchen Ausführungsformen umfasst das Verfahren:
- Bereitstellung einer editierbaren Konfiguration, die Anforderungen eines Nutzers hinsichtlich der Geschwindigkeit, der geographischen Lage, der Sicherheit und/oder der Kosten einer für die Speicherung von Daten zu nutzenden IT-Infrastruktur sowie Anforderungen des Nutzers hinsichtlich der Verfügbarkeit der zu speichernden Daten enthält;
- Bereitstellung eines Speicherdienst-Katalogs, der Spezifikationen einer Vielzahl von zur Verfügung stehenden Speicherdiensten umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur des Speicherdienstes enthalten;
- um den Verteilungsplan zu generieren, automatische Auswertung der Konfiguration und des Speicherdienst-Katalogs, um in Abhängigkeit von den Spezifikationen der verfügbaren Speicherdienste und in Abhängigkeit der Anforderungen des Nutzers ein Fehlerkorrekturverfahren aus einer Vielzahl von Fehlerkorrekturverfahren zu identifizieren, das den Anforderungen hinsichtlich der Verfügbarkeit der zu speichernden Daten genügt und um die im Verteilungsplan identifizierten Speicherdienste aus der Vielzahl der zur Verfügung stehenden Speicherdienste zu identifizieren, die zu einer verteilten Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind; und
- Verwenden des identifizierten Fehlerkorrekturverfahrens als das Fehlerkorrekturverfahren des Verteilungsplans.

Beispielsweise können die Konfigurationsregeln enthalten, die von dem Nutzer erstellt und angepasst werden können. Einige Regeln sollen hier beispielhaft angeführt werden: "wenn die zu speichernde Datei eine Backupdatei ist, dann sollen die Kosten pro Gigabyte Speicherplatz unterhalb 2 Euro liegen"; "wenn die zu speichernde Datei eine Backupdatei ist, dann sollen die minimal garantierte UploadRate bei 1 MB/Sekunde liegen"; "wenn die erforderliche Dateiverfügbarkeit 2 X 9/9 ist, dann sollen die Kosten pro GB Speicherplatz unter 2 liegen, wobei die Upload- und Download Übertragungsrate so groß wie möglich sein soll.

Bei Ausführungsformen in welchen der Verteilungsplan von dem Nutzer-Computersystem generiert wird erfolgt auch die automatische Auswertung durch das Nutzer-Computersystem. Wird der Verteilungsplan von dem Dateimanagementserver generiert, erfolgt auch die automatische Auswertung durch den Dateimanagementserver. Vorzugsweise wird jedoch in beiden Ausführungsformen sowohl der Speicherdienst-Katalog als auch die Nutzer-Konfiguration zur Nutzung durch eine Vielzahl von Nutzer-Computersystemen zentral gespeichert, zum Beispiel auf dem Dateimanagementserver oder einem mit diesem verbundenen Datenbankserver. Dies kann die Aktualisierung des Speicherdienst-Katalogs erleichtern. Nach manchen Ausführungsformen hat der Dateimanagementserver eine Schnittstelle, die mit Schnittstellen der Speicherdienste interoperabel ist und bewirkt, dass bei einer Änderung bezüglich der Sicherheit, geographischen Lage, Verfügbarkeit oder Kosten der IT-Infrastruktur eines der Speicherdienste eine automatische Aktualisierung der in dem Speicherdienst-Katalog enthaltenen Spezifikation dieses Speicherdienst bewirkt wird.

Nach Ausführungsformen werden für die automatische Generierung des Verteilungsplans außerdem Merkmale der zu speichernden Datei berücksichtigt. Diese Merkmale können zum Beispiel ein oder mehrere der folgenden Merkmale beinhalten: den Dateityp (Back-up-Datei oder regelmäßig genutzte Arbeitsdatei); das Dateiformat (.doc, .jpg, .avi, .pdf, .exe usw.); die Dateigröße und weitere. Falls der Verteilungsplan von dem Dateimanagementserver erstellt wird können diese Merkmale zum Beispiel als Bestandteil einer Nachricht von dem Nutzer-Computersystem an den Dateimanagementserver übertragen werden. Dies kann vorteilhaft sein, dafür unterschiedliche Dateitypen beispielsweise unterschiedliche Speicherdienste optimal sein können. Für selten genutzte Backupdateien können zum Beispiel Auswahl löschen kostengünstige aber vergleichsweise langsame Speicherdienste geeignet sein während für häufig genutzte Dateien Speicherdienste geeigneter sein können, die eine hohe Uploadrate und/oder Downloadrate anbieten. Die besagten Merkmale der Datei können nicht nur Einfluss haben auf die Speicherdienste, deren Identifikatoren in den Verteilungsplan integriert werden, sondern auch auf das in dem Verteilungsplan spezifizierte Fehlerkorrekturverfahren. Ist die zu speichernde Datei zum Beispiel sehr groß und eine schnelle Speicherung über das Netzwerk gewünscht, kann das Fehlerkorrekturverfahren automatisch so konfiguriert werden, dass es viele kleine Dateifragmente generiert, die schnell parallel über das Netzwerk übertragen werden können. Bei einer kleineren Datei kann auch eine entsprechend kleinere Anzahl an Dateifragmenten ausreichend sein um eine hinreichend schnelle Übertragung zu gewährleisten.

Nach Ausführungsformen generiert das Nutzer-Computersystem die Metadaten, die die Rekonstruktion der Datei aus den gespeicherten Dateifragmenten erlauben. Das Nutzer-Computersystem ist einem Nutzer zugeordnet. Die Metadaten können ein oder mehrere der folgenden Elemente beinhalten:
- Pfade zu allen Speicherorten in den Speichermedien der Speicherdienste, in welchen die Dateifragmente der Datei gemäß des Verteilungsplans gespeichert werden sollen oder bereits gespeichert wurden; und/oder
- einen symmetrischen Schlüssel, der eine Entschlüsselung des mit diesem symmetrischen Schlüssel verschlüsselten Dateifragments erlaubt; der symmetrische Schlüssel kann zum Beispiel ein für die zu speichernde dateispezifischer Schlüssel sein, was die Sicherheit weiter erhöhen kann; der symmetrische Schlüssel kann beispielsweise ein Hashwert der zu speichernden Datei sein; Zumindest der symmetrische Schlüssel kann von einem öffentlichen kryptographischen Schlüssel des Nutzer-Computersystems, das die Datei zum Zwecke der Speicherung fragmentierte, oder von einem öffentlichen kryptographischen Schlüssel eines anderen Nutzer-Computersystems, das von dem Dateimanagementserver als berechtigt zum Zugriff auf die bereits verteilt gespeicherte Datei erkannt wurde, verschlüsselt worden sein. Dies kann bewirken dass der Dateimanagementserver den symmetrischen Schlüssel nicht zur Entschlüsselung der Dateifragmente verwenden kann, sodass der Inhalt der Dateifragmente vor Zugriff durch den Dateimanagementserver geschützt sind; und/oder
- für jedes der Dateifragmente einen von dem Nutzer-Computersystem berechneten Hash-Wert des Dateifragments; und/oder
- den ursprünglichen Dateinamen der verteilt gespeicherten Datei; und/oder
- Konfigurationsdaten des Fehlerkorrekturverfahren; die Spezifikation kann insbesondere einen Identifikator (ID) und/oder Konfigurationsparameter des zur Erzeugung der Dateifragmente verwendeten Fehlerkorrekturverfahrens (z.B. die später erläuterten Parameter Wortlänge, Anzahl K der generierten Dateipartitionen und/oder Anzahl M der verlustkompensierbaren Dateipartitionen;
- ein Mapping des ursprünglichen Dateinamens zu den Hashwerten und Pfaden der generierten Dateifragmente.

Das Nutzer-Computersystem speichert die Metadaten in einem - vorzugsweise geschützten - Speicher des Nutzer-Computersystems und überträgt die Metadaten an den Dateimanagementserver. Der Dateimanagementserver verwendet die übertragenen Metadaten zur Kontrolle des Zugriffs weiterer Nutzer auf die Datei. Dies kann zum Beispiel dadurch geschehen, dass die Metadaten selektiv nur solchen weiteren Nutzern zur Verfügung gestellt werden, die eine Berechtigungsanfrage an den Dateimanagementserver zum Lesen und/oder schreiben der Datei gesendet haben und die von dem Dateimanagementserver als berechtigt zur Durchführung der angefragten Lese- bzw. Schreiboperation erkannt wurden. Dies kann vorteilhaft sein, da die Metadaten dem Dateimanagementserver erlauben, eine feingranulare Zugangskontrolle speziell für diese Datei für eine Vielzahl von weiteren Nutzern zu ermöglichen, wobei weder der Dateimanagementserver Zugriff auf die Daten hat noch die einzelnen Speicherdienste die ursprüngliche Datei rekonstruieren können. Ihnen fehlen hierzu die Metadaten und außerdem die durch die anderen Speicherdienste gespeicherten Dateifragmente.

Nach manchen Ausführungsformen sind in dem Nutzer-Computersystem Metadaten einer Vielzahl von verteilt in den Speicherdiensten gespeicherten Dateien gespeichert. Eine Client Applikation des Nutzer-Computersystems verwendet die besagten Metadaten zur Generierung einer clientbasierten Sicht auf die verteilt gespeicherten Dateien. Zusätzlich oder alternativ hierzu sind in dem Dateimanagementserver Metadaten einer Vielzahl von verteilt in den Speicherdiensten gespeicherten Dateien gespeichert. Ein auf dem Dateimanagementserver gehostetes Webportal verwendet die besagten Metadaten zur Generierung einer netzwerkbasierten Sicht auf die verteilt gespeicherten Dateien. Eine clientbasierte Sicht ist z.B. eine von einem Prozessor eines als Client des Dateimanagementservers agierenden Nutzer-Computersystems generierte Sicht. Eine netzwerkbasierte Sicht ist z.B. eine von einem Prozessor des Dateimanagementservers oder eines mit diesem operativ verbundenen Applikations- oder Webservers generierte und über das Netzwerk einem Client zur Verfügung gestellte Sicht.

Die clientbasierte und/oder die netzwerkbasierte Sicht ist dazu konfiguriert, die ursprünglichen Dateinamen der Vielzahl der verteilt gespeicherten Dateien aus den Metadaten dynamisch zu rekonstruieren und durch Auswahl einer der verteilt gespeicherten Dateien eine dynamische und automatische Rekonstruktion des Dateiinhalts der ausgewählten Datei durch das Nutzer-Computersystem oder durch ein weiteres berechtigten Nutzer-Computersystem zu initiieren. Die Speicherdienste, in welchen Fragmente der ausgewählten Datei gespeichert sind, werden hierbei durch die Sicht verborgen.
Nach Ausführungsformen enthalten die Anforderungen hinsichtlich der Verfügbarkeit, der geographischen Lage, der Geschwindigkeit, der Sicherheit und/oder Kosten ein oder mehrere der folgenden Daten in nutzerkonfigurierbarer Form:
- eine Spezifikation des Fehlerkorrekturverfahrens, nach welchem die Dateifragmente erzeugt werden sollen um in dem Speichermedium des Speicherdienstes gespeichert zu werden; die Spezifikation kann insbesondere einen Identifikator (ID) eines standardmäßig verwendeten Fehlerkorrekturverfahrens und Standard-Konfigurationsparameter wie etwa eine Wortlänge, eine Anzahl K der zu erzeugenden Dateipartitionen ohne Fehlerkorrekturbits, eine Anzahl M der verlustkompensierbaren Dateipartitionen, eine Cachegröße des für die Generierung der Dateipartitionen oder Dateifragmente zu reservierenden Caches etc.; Diese Standard-Konfigurationsparameter können ggf. in Abhängigkeit von Merkmalen der Datei und/oder Merkmalen der verfügbaren Speicherdienste dynamisch während der Generierung des Verteilungsplans modifiziert werden;
- Angaben zur mindestens erforderlichen Verfügbarkeit des Speicherdienstes; dies kann zum Beispiel eine Angabe beinhalten, bis zu welcher Anzahl von ausgefallenen Speicherdiensten die ursprüngliche Datei aus den in den übrigen Speicherdiensten gespeicherten Dateifragmente noch rekonstruierbar sein soll;
- Angaben zu einer von dem Nutzer geforderten geographischen Lage der IT-Infrastruktur des Speicherdienstes und/oder der geographischen Lage des Sitzes des Anbieters des Speicherdienstes;
- Angaben zur von dem Speicherdienst mindestens zu gewährenden Datensicherheit für die bei dem Speicherdienst gespeicherten Daten; diese Angaben können z.B. eine Angabe der mindestens erforderlichen Bitlänge des zur Verschlüsselung der Dateifragmente verwendeten Schlüssels beinhalten;
- Angaben zur von dem Speicherdienst mindestens zu gewährenden Datensicherheit während eines Speicherns und/oder Lesens von Daten über diesen Speicherdienst; diese Angaben können z.B. eine Angabe der unterstützen Verschlüsselungsprotokolle, die bei der Übertragung der Dateifragmente verwendeten werden können, beinhalten;
- Angaben zu den maximalen Kosten des Transfers der zu speichernden Daten an den Speicherdienst; die Angaben können z.B. in EURO pro GB Upload oder Download spezifiziert sein;
- Angaben zur minimalen Geschwindigkeit des Datenuploads zu dem oder des Datendownloads von dem Speicherdienst; die Angaben können z.B. in übertragene MB pro Sekunde für Upload und/oder Download spezifiziert sein.

Nach Ausführungsformen enthalten die Angaben in jeder der Spezifikationen eines der Speicherdienste hinsichtlich der Verfügbarkeit, der geographischen Lage, der Geschwindigkeit, der Sicherheit und/oder der Kosten der für die Speicherung des Dateifragments genutzten IT-Infrastruktur des Speicherdienstes ein oder mehrere der folgenden Daten:
- Angaben zur garantierten Mindestverfügbarkeit des Speicherdienstes;
- Angaben zur der von dem Speicherdienst mindestens gewährten Datensicherheit der von diesem Speicherdienst gespeicherten Daten;
- Angaben zur von dem Speicherdienst während eines Speicherns und/oder Lesens von Daten über diesen Speicherdienst mindestens gewährten Datensicherheit;
- Angaben zur geographischen Lage der IT-Infrastruktur des Speicherdienstes und/oder der geographischen Lage des Sitzes des Anbieters des Speicherdienstes;
- Angaben zu den Kosten des Transfers der zu speichernden Daten an den Speicherdienst;
- Angaben zur minimal garantierten Geschwindigkeit des Datenuploads zu dem oder des Datendownloads von dem Speicherdienst.

Ein "Wort" des Fehlerkorrekturverfahrens ist eine Bitgruppe, die die kleinste Einheit darstellt, in Bezug auf welche ein Fehler festgestellt und gegebenenfalls korrigiert wird. Häufig werden 8 Bit als Wortlänge verwendet. Aus einer Bit-Wortlänge ergibt sich eine feste Größe an Daten die korrigiert werden können.

Die Ermittlung des Fehlerkorrekturverfahrens, das in dem Verteilungsplan spezifiziert werden soll kann eine Ermittlung von Konfigurationsparametern des Fehlerkorrekturverfahrens beinhalten. Zu den Konfigurationsparametern können z.B. gehören: eine Wortlänge W; eine Anzahl K von Dateipartitionen ohne Berücksichtigung der Fehlerkorrekturbits; und/oder eine Anzahl M der Dateipartitionen K, deren Verlust durch den Informationsgehalt der Fehlerkorrekturbits notfalls kompensiert werden soll. Eine "Dateipartition" ist hier ein zunächst generiertes Dateifragment, das noch keinerlei Fehlerkorrekturbit enthält. Aus diesen zunächst generierten Dateipartitionen können die eigentlichen Dateifragmente mit den Fehlerkorrekturbits berechnet werden, die schließlich an die Speicherdienste übertragen werden. Beispielsweise könnte die Dateigröße der zu speichernden Datei in die Ermittlung des Fehlerkorrekturverfahrens eingehen. Die zu speichernde Datei könnte eine Dateigröße von "10 Mb" besitzen.

Nach einem ersten Beispiel könnte die Anzahl der Dateipartitionen K "4" betragen. Dies bedeutet, dass das Fehlerkorrekturverfahren die zu speichernde Datei zunächst in 4 Dateipartitionen der Größe 2,5 Mb aufteilt. Die Anzahl M der Dateipartitionen, deren Verlust ggf. kompensiert werden soll, könnte "1" betragen. Die Konfigurationsparameter K=4 und M=1 bewirken, dass das Fehlerkorrekturverfahren insgesamt 5 Dateifragmente generiert, die je 10Mb/4=2,5 Mb groß sind. Insgesamt würde ein Fehlerkorrekturalgorithmus mit der exemplarischen k=4, m=1 Konfiguration 12,5MB Daten aus der ursprünglichen 10 MB großen Ausgangsdatei erzeugen. Vier der Dateifragmente könnten aus den Dateipartitionen bestehen und somit rein aus Dateidaten bestehen während das fünfte Dateifragment völlig aus Fehlerkorrekturbits bestehen könnte. Gemäß einem zweiten Beispiel könnten die Konfigurationsparameter K=4 und M=2 betragen und bewirken, das Fehlerkorrekturverfahren insgesamt 6 Dateifragmente generiert, 2 davon bestehen aus Fehlerkorrekturbits, 4 bestehen aus Dateipartitionen. Aus der Ausgansdatei werden insgesamt 6 x 2,5 Mb= 15 Mb Daten erzeugt.

Neben Fehlerkorrekturverfahren, welche Dateifragmente generieren, die entweder aus Dateipartitionen oder reinen Fehlerkorrekturdaten bestehen, können in anderen Ausführungsformen auch Fehlerkorrekturverfahren verwendet werden, bei welches jede generierte Dateifragment einen ersten Anteil bestehend rein aus Dateidaten und einen zweiten Anteil bestehend aus Fehlerkorrekturbits beinhaltet. In dem oben genannten ersten Beispiel mit K=4 und M=1 für eine 10MB Datei könnten z.B. 5 Dateifragmente a 2,5 Mb generiert werden, die pro Dateifragment 2,5MB/5=0,5Mb Fehlerkorrekturbits beinhalten. In dem oben genannten zweiten Beispiel mit K=4 und M=2 für die 10MB Datei könnten z.B. 6 Dateifragmente a 2,5 Mb generiert werden, die jeweils (2^{∗}2,5Mb)/6=0,83 Mb Fehlerkorrekturbits beinhalten.

Die Konfigurationsparameter K und M sind nach manchen Ausführungsformen vom Nutzer standardmäßig vorkonfiguriert, können jedoch in Abhängigkeit von Merkmalen der Datei, in Abhängigkeit von den Anforderungen des Nutzers und/oder von den Spezifikationen der Eigenschaften der verfügbaren Speicherdienste dynamisch geändert werden um eine optimierte Verteilung (im Hinblick auf Kosten, Verfügbarkeit, etc.) der Dateifragmente zu bewirken. Die dynamischen Konfigurationsparameter werden in den generierten Verteilungsplan integriert um das darin identifizierte Fehlerkorrekturverfahren näher zu charakterisieren. Mit steigender Anzahl M der verlustkompensierbaren Dateipartitionen wird die Verfügbarkeit und Ausfallsicherheit der verteilt gespeicherten Datei erhöht, allerdings erhöht sich bei unverändertem K auch die Größe der einzelnen Dateifragmente.

Nach manchen Ausführungsformen werden die Konfigurationsparameter M und/oder K des in dem Verteilungsplan spezifizierten Fehlerkorrekturverfahren so ermittelt, dass mit steigenden Anforderungen des Nutzers an die Verfügbarkeit der Datei nicht nur M steigt, sondern auch K. Als Konsequenz dessen wird auch die Anzahl der von dem Fehlerkorrekturverfahren zu generierenden Dateifragmente erhöht um die Größe der einzelnen Dateifragmente annähernd konstant zu halten und eine gleichbleibend kurze Übertragungszeit bei parallelem Dateifragment-Upload zu gewährleisten. Ggf. müssen in diesem Fall auch die Anzahl der zur parallelen Speicherung der Dateifragmente verwendeten und in dem Verteilungsplan spezifizierten Speicherdienste erhöht werden. Vorzugsweise werden die Konfigurationsparameter K und/oder M dynamisch ermittelt, der Nutzer gibt lediglich in seinen konfigurierbaren Anforderungen an, ob die verteilte Speicherung in erster Linie kostenoptimiert, geschwindigkeitsoptimiert oder verfügbarkeitsoptimiert erfolgen soll. Dies kann vorteilhaft sein da der Nutzer sich somit nicht mit den algorithmischen Spezifika des Fehlerkorrekturverfahrens auseinandersetzen muss.

Nach Ausführungsformen beinhaltet die Ermittlung des Fehlerkorrekturverfahrens, welches den Anforderungen des Nutzers hinsichtlich der Verfügbarkeit der Datei genügt, eine Ermittlung der zu erwartenden Gesamtgröße aller durch das Fehlerkorrekturverfahren zu generierenden Dateifragmente. Für jedes der zu generierenden Dateifragmente wird hierbei ein Speicherdienst identifiziert welcher gemäß dessen Angaben den Anforderungen hinsichtlich der Geschwindigkeit, geographischen Lage, Sicherheit und/oder Kosten unter Berücksichtigung der zu erwartenden Gesamtgröße genügt. Dies kann vorteilhaft sein, weil ein sehr flexibles Verfahren zur verteilten Speicherung von Dateien bereitgestellt wird, welches dynamisch in Abhängigkeit an die Größe jeder einzelnen zu speichernden Datei und den durch den Nutzer und die verfügbaren Speicherdienste vorgegebenen Rahmenbedingungen einen geeigneten Verteilungsplan einschließlich eines dynamisch daran angepassten Fehlerkorrekturverfahrens erstellt.

Zusätzlich oder alternativ dazu beinhaltet die Ermittlung des Fehlerkorrekturverfahrens eine automatische Prüfung, ob das ermittelte Fehlerkorrekturverfahren die Generierung von Dateifragmenten bewirken würde, deren Gesamtgröße es nicht erlaubt, eine hinreichende Anzahl von Speicherdiensten zu identifizieren, die gemäß deren Angaben den Anforderungen hinsichtlich der Geschwindigkeit, Sicherheit und/oder Kosten unter Berücksichtigung der Gesamtgröße genügen. Falls dies der Fall ist, also keine hinreichende Anzahl von Speicherdiensten identifiziert werden kann, erfolgt automatisch eine Ermittlung eines anderen Fehlerkorrekturverfahrens, welches dazu konfiguriert ist, Dateifragmente zu erzeugen, deren zu erwartende Gesamtgröße hinreichend klein ist, sodass für jedes zu generierende Dateifragment ein Speicherdienst identifiziert werden kann welcher gemäß seiner Angaben den Anforderungen hinsichtlich der Geschwindigkeit, geographischen Lage, Sicherheit und/oder Kosten unter Berücksichtigung der zu erwartenden Gesamtgröße genügt. Dies kann vorteilhaft sein, weil eine automatische Anpassung des Fehlerkorrekturverfahrens an die aktuell gemäß Katalog verfügbaren Speicherdienste und die aktuell von dem Nutzer spezifizierten Anforderungen möglich ist, ohne dass der Nutzer hier manuell eingreifen müsste.

Zusätzlich oder alternativ wird das Fehlerkorrekturverfahren automatisch so ermittelt, dass gewährleistet ist, dass Anforderungen des Nutzers im Hinblick auf eine maximale Dauer des Datentransfers zur Übertragung der Datei über das Netzwerk erfüllt werden. Um dies zu erreichen, wird das ermittelte Fehlerkorrekturverfahren automatisch so konfiguriert, dass durch dieses eine hinreichend große Anzahl der generierten Dateifragmente generiert wird, sodass bei paralleler Übertragung dieser Dateifragmente zu den (Upload) oder von den (Download) in dem Verteilungsplan (Upload) oder den Metadaten (Download) spezifizierten Speicherdiensten die Übertragungszeit für alle Dateifragmente unterhalb der maximalen Dauer liegt.
Bei dem Fehlerkorrekturverfahren kann es sich beispielsweise um das Reed-Muller Verfahren, das Reed-Solomon Verfahren, das Cauchy-Reed-Solomon Verfahren oder vergleichbare Fehlerkorrekturverfahren handeln.

Nach Ausführungsformen enthält die Konfiguration ferner ein Mindestvertrauensniveau. Das Mindestvertrauensniveau kann von dem Nutzer konfiguriert und geändert werden. Das Mindestvertrauensniveau spezifiziert ein von dem Nutzer geforderte Mindestmaß an Verlässlichkeit eines Authentifizierungsverfahrens, mittels welchem sich ein weiterer Nutzer gegenüber einem Dateimanagementserver authentifizieren muss, um lesend und/oder schreibend auf die in den Speichermedien der identifizierten Speicherdienste gespeicherten Datei zugreifen zu dürfen. Dies kann vorteilhaft sein, da dem Nutzer eine konfigurierbare und feingranulare (auf Dateiebene befindliche) Kontrolle im Hinblick auf den Zugriff auf diese Datei durch andere Nutzer gegeben wird. Der Nutzer kann zum Beispiel ausschließen, dass eine Datei, die besonders vertrauliche und schützenswerte Informationen beinhaltet, von einem Nutzer eingesehen werden kann, welcher sich nur mit einem vergleichsweise einfach zu knackenden Authentifizierungsverfahren (zum Beispiel Benutzername-Passwort) gegenüber dem Dateimanagementserver authentifiziert hat.

Nach Ausführungsformen umfasst das Verfahren ferner eine Berechnung eines Hashwerts der gesamten Datei durch das Nutzer-Computersystem. Das Nutzer-Computersystem verschlüsselt jedes der Dateifragmente der Datei, wobei der Hashwert als symmetrischer Schlüssel zur Verschlüsselung der Dateifragmente verwendet wird.
Schließlich verschlüsselt das Nutzer-Computersystem die generierten Metadaten, die den symmetrischen Schlüssel beinhalten, oder zumindest den symmetrischen Schlüssel, durch einen öffentlichen Schlüssel ("Verschlüsselungsschlüssel"), der dem Nutzer-Computersystem, das die Daten verteilt gespeichert hat und einem Nutzer zugeordnet ist. Ein privater Schlüssel ("Entschlüsselungsschlüssel") bildet mit dem öffentlichen Schlüssel ein asymmetrisches kryptographisches Schlüsselpaar, wobei der öffentliche Schlüssel in dem Dateimanagementserver (DMS) mit einem Nutzerprofil des Nutzers, dem der öffentliche Schlüssel zugeordnet ist, verknüpft bei dem DMS gespeichert ist. Der private Schlüssel, mit welchem die Metadaten bzw. der symmetrische Schlüssel wieder entschlüsselt werden kann, ist vorzugsweise in dem Nutzer-Computersystem, für welches die Metadaten generiert und verschlüsselt wurden, geschützt gespeichert. Falls mehrere Nutzer-Computersysteme zum Zugriff auf die verteilt gespeicherte Datei berechtigt sind kann nach Ausführungsformen für jedes dieser berechtigten Nutzer-Computersysteme eine eigene Version von Metadaten für die eine verteilt gespeicherte Datei generiert werden, wobei die Metadaten oder zumindest deren symmetrischer Schlüssel durch das Nutzer-Computersystem, das die Datei ursprünglich gemäß dem Verteilungsplan verteilt speicherte, mittels des öffentlichen Schlüssels des jeweiligen Nutzer-Computersystems verschlüsselt wird. Die Metadaten bzw. der symmetrische Schlüssel können nur von demjenigen Nutzer-Computersystem entschlüsselt werden, die einen zu dem öffentlichen Verschlüsselungsschlüssel korrespondierenden privaten kryptographischen Schlüssel geschützt gespeichert haben.

Zusätzlich oder alternativ dazu kann das Nutzer-Computersystem die generierten Metadaten durch einen öffentlichen Schlüssel eines weiteren, zum Zugriff auf die Datei berechtigten Nutzer-Computersystems, das einem weiteren Nutzer zugeordnet ist, verschlüsseln, sodass eine andere Version der verschlüsselten Metadaten generiert wird, um die andere Version der Metadaten für eine sichere Übermittlung an das weitere Nutzer-Computersystem zu verwenden.

Das Nutzer-Computersystem generiert die Metadaten für die zu speichernde Datei, wobei die Metadaten zumindest den berechneten Hashwert der Datei - vorzugsweise in verschlüsselter Form - sowie die Hashwerte der Dateifragmente beinhalten. Die Dateifragmente werden in verschlüsselter Form in den Speichermedien der identifizierten Speicherdienste gespeichert. Die Verschlüsselung der einzelnen Dateifragmente mit einem Datei-spezifisch erstellten Schlüssel kann die Sicherheit des Verfahrens weiter erhöhen, da ein anderer Nutzer, der berechtigterweise oder unberechtigterweise die Metadaten einer bestimmten Datei empfängt, selektiv nur auf diese eine Datei zugreifen kann und nicht etwa auf eine andere Datei. Bei dem als symmetrischer Schlüssel verwendeten Hashwertes kann es sich beispielsweise um einen mittels eines MD5, Sha-1 oder Sha-2 Hashalgorithmus berechneten Hashwert handeln.

Nach Ausführungsformen können die Dateifragment-spezifischen Hashwerte als Identifikatoren der Dateifragmente dienen. Die Hash Werte der Dateifragmente können mit einem Mapping mit dem ursprünglichen Dateinamen verknüpft werden, und das Mapping kann zusammen mit dem ursprünglichen Dateinamen in die Metadaten aufgenommen werden. Das Nutzer-Computersystem verschlüsselt jedes der Dateifragmente der Datei, wobei der Hashwert der gesamten, ursprünglichen Datei als symmetrischer Schlüssel verwendet wird. Vorzugsweise wird eine starke Verschlüsselung beispielsweise mittels AES-256 oder AES 512 verwendet.

Nach Ausführungsformen umfasst das Verfahren eine Authentifizierung des Nutzer-Computersystems gegenüber dem Dateimanagementserver. Auf Empfang der Berechtigungsanfrage zur Speicherung der Dateifragmente, prüft der Dateimanagementserver ob der Nutzer, dem das Nutzer-Computersystem zugeordnet ist, Zugriffsrechte zum Speichern der Datei mittels der identifizierten Speicherdienste besitzt. Der Dateimanagementserver fordert die Berechtigungstoken nur dann von den identifizierten Speicherdiensten an, falls sich der Nutzer gegenüber dem Dateimanagementserver erfolgreich authentifiziert hat und falls der Nutzer die erforderlichen Zugriffsrechte besitzt. Die Prüfung der Zugriffsrechte erfolgt dabei vorzugsweise nur bezogen auf die angeforderte Schreib- und/oder Leseoperation bezüglich der zu schreibenden oder zu lesenden Datei. Dies hat den Vorteil, dass die Zugriffskontrolle sehr feingranulare ist im Hinblick auf einzelne Nutzer, im Hinblick auf die Zeit, und im Hinblick auf einzelne Dateien flexibel und spezifisch erfolgen kann.

Nach Ausführungsformen werden die Berechtigungstoken, die in Antwort auf die Anforderung des Dateimanagementservers von jedem der in dem Verteilungsplan identifizierten mehreren Speicherdienste an den Dateimanagementserver übermittelt werden, selektiv nur für die Berechtigungsanfrage zur Speicherung der Datei generiert und besitzen nur temporäre Gültigkeit. Gleiches gilt auch für Berechtigungstoken, die in Antwort auf Anforderungen für das Lesen der Datei bzw. deren Dateifragmente durch die Speicherdienste generiert werden. Nach Ausführungsformen sind die Berechtigungstoken für das Schreiben von Dateifragmenten als URLs ausgebildet, die jeweils einen direkten Schreibzugriff auf einen durch die URL identifizierten Speicherplatz auf dem Speichermedium eines der Speicherdienste ermöglicht. In analoger Weise sind Berechtigungstoken für das Lesen von Dateifragmenten als URLs ausgebildet, die jeweils einen direkten Lesezugriff auf einen durch die URL identifizierten Speicherplatz auf dem Speichermedium eines der Speicherdienste ermöglicht. Dies kann vorteilhaft sein, da der Dateimanagementserver nicht als Router fungiert, was den Schutz der Daten vor unberechtigtem Zugriff durch den Dateimanagementserver gewährleisten kann. Dass die Berechtigungstoken nur eine temporäre Gültigkeit haben kann die Sicherheit des Verfahrens ebenfalls erhöhen. Nach Ablauf einer voreingestellter Zeit, zum Beispiel einigen Sekunden, Minuten oder Tagen, wird das Berechtigungstoken, zum Beispiel eine URL, automatisch ungültig. Die Verwendung von Berechtigung-URLs hat zudem den Vorteil, dass auch Nutzern, die sich nicht bei den einzelnen Speicherdiensten registriert haben, Zugriff auf die Datei gewährt werden kann, da der Dateimanagementserver zentral die Zugriffsrechte verwaltet. Der Eigentümer der Datei kann spezifisch festlegen, ob die Zugriffsrechte rein lesend und/oder auch schreibend sind. Dies kann die Flexibilität und Zahl der Anwendungsszenarien des Verfahrens enorm erhöhen, da weitere Nutzer sich nur bei dem Dateimanagementserver registrieren müssen um beispielsweise eine Datei ansehen zu können. Nach manchen Ausführungsformen ist noch nicht einmal dies erforderlich. Beispielsweise könnte auch ein nicht bei dem Dateimanagementserver registrierter weiterer Nutzer seine Identität gegenüber dem Dateimanagementserver mittels seines elektronischen Personalausweises nachweisen. Bei Ausführungsformen, bei welchen der Schlüssel, mit dem die Dateifragmente verschlüsselt wurden, mit dem öffentlichen Schlüssel eines berechtigten Empfänger-Computersystems verschlüsselt wird, kann allerdings eine Registrierung für die zentrale Hinterlegung des öffentlichen Verschlüsselungsschlüssels des Empfänger-Computersystems erforderlich sein.

Jede URL kann beispielsweise aus einer Pfadangabe sowie weiteren Angaben bestehen. Die Pfadangabe kann zum Beispiel eine ID des Speicherdienstes sowie eine Pfadangabe des entsprechenden Speicherplatzes auf dem Speichermedium des Speicherdienstes beinhalten. Die weiteren Angaben können zum Beispiel Parameterwerte umfassen, aus welchen die Berechtigung des Nutzers zum Zugriff auf den besagten Speicherplatz hervorgeht und die von dem Speicherdienst geprüft werden, wenn das Nutzer-Computersystem über die besagte URL auf das Dateifragment zugreift.

Nach Ausführungsformen sendet der Dateimanagementserver, nachdem sich der weitere Nutzer erfolgreich gegenüber dem Dateimanagementserver authentifiziert hat und außerdem der Dateimanagementserver festgestellt hat, dass der weitere Nutzer zum Zugriff auf die Datei berechtigt ist, einen öffentlichen Schlüssel des weiteren Nutzers, der z.B. in einem von dem Dateimanagementserver verwalteten Nutzerprofil gespeichert ist an das Nutzer-Computersystem, das die Datei verteilt gespeichert hat. Das besagte Nutzer-Computersystem empfängt den öffentlichen Schlüssel des anfragenden, berechtigten Nutzer-Computersystems, verschlüsselt damit den symmetrischen Schlüssel und sendet die Metadaten mit dem verschlüsselten symmetrischen Schlüssel an den Dateimanagementserver. Der Dateimanagementserver wiederum sendet die Metadaten der besagten Datei an das weitere Nutzer-Computersystem. Optional kann der Dateimanagementserver die besagten Metadaten, also eine spezifisch für dieses berechtigte Nutzer-Computersystem verschlüsselte Version der Metadaten der Datei, speichern, sodass bei einer späteren Zugriffsanfrage des berechtigten Nutzer-Computersystems der Dateimanagementserver die gespeicherten Metadaten direkt ohne weitere Interaktion mit dem Nutzer-Computersystem an das berechtigte Nutzer-Computersystem weiterleiten kann. Die für verschiedene berechtigte Nutzer-Computersysteme generierten und unterschiedlich verschlüsselten Versionen der Metadaten können von dem Dateimanagementserver z.B. in einer Datenbank gespeichert werden. Das weitere Nutzer-Computersystem verwendet seinen geschützt gespeicherten privaten asymmetrischen Schlüssel, um die Metadaten der Datei oder zumindest den verschlüsselten symmetrischen Schlüssel zu entschlüsseln und verwendet die von dem Dateimanagementserver angeforderten und weitergeleiteten Berechtigungstoken zum Lesen der Datei, indem es die Dateifragmente der Datei von den einzelnen Speicherdiensten herunterlädt . Sobald die Dateifragmente und die Metadaten oder zumindest der symmetrische Schlüssel in entschlüsselter Form vorliegen, verwendet eine auf dem weiteren Nutzer-Computersystem installierte Client-Applikation den entschlüsselten symmetrischen Schlüssel, um die Dateifragmente zu entschlüsseln. Außerdem können die Metadaten noch weitere Informationen beinhalten, aus welchem hervorgeht, wie der Inhalt der ursprünglichen Datei von den durch das Fehlerkorrekturverfahren generierten Fehlerkorrekturbits getrennt werden können und wie die ursprüngliche Datei einschließlich des Dateinamens aus den Dateifragmenten rekonstruiert werden kann.

Alle diese Schritte geschehen vorzugsweise voll automatisch unter der Kontrolle der Client-Applikation, sodass der weitere Nutzer, der die Datei lesen möchte, im normalen Betrieb nicht erfährt, auf welchen und wie vielen Speicherdiensten die Datei verteilt gespeichert ist. Dies kann vorteilhaft sein, da der Dateimanagementserver zentral die öffentlichen Schlüssel einer Vielzahl von Nutzern verwalten kann und durch die Weiterleitung sowohl der Metadaten als auch der öffentlichen Schlüssel selektiv an berechtigte weitere Nutzer einen besonders hohen Schutz vor unberechtigtem Zugriff gewährleisten kann. Der symmetrische Schlüssel sorgt dafür, dass die Dateifragmente verschlüsselt in den Speichermedien der einzelnen Speicherdienste gespeichert werden und auch der Upload und Download der Dateifragmente in verschlüsselter Form erfolgt, wobei vorzugsweise für jede einzigartige Datei ein anderer symmetrischer Schlüssel dynamisch generiert wird. Die beschriebene Kombination aus einem dateispezifischen symmetrischen Schlüssel zur Ver- und Entschlüsselung der Dateifragmente und einem dem Nutzer zugeordneten öffentlichen Schlüssel zur Integration des symmetrischen Schlüssels in die Metadaten der Datei kann außerdem vorteilhaft sein, da eine Verschlüsselung bzw. Entschlüsselung großer Datenmengen mittels symmetrischer kryptographische Schlüssel in der Regel deutlich performanter ist als mittels eines asymmetrischen kryptografischen Schlüsselpaars. Der Geschwindigkeitsaspekt ist bei der Verschlüsselung der (vergleichsweise kleinen) Metadaten weniger relevant, so das hier auf eine Verschlüsselung mit einem asymmetrischen kryptografischen Schlüsselpaar zurückgegriffen werden kann, die den Austausch eines zur Entschlüsselung notwendigen Schlüssels ermöglicht, ohne dabei den privaten Schlüssel zu offenbaren. Die Verschlüsselung der Datensätze mit dem eigenen Hashwert kann vorteilhaft sein, da es dem DMS dadurch ermöglicht wird, die redundante Datenspeicherung zu vermeiden, falls beispielsweise verschiedene Anwender die gleichen Inhalte ablegen sollten. Nach manchen Ausführungsformen ist ein Signierschlüssel in dem Dateimanagementserver geschützt gespeichert. Das Verfahren umfasst ferner eine Bereitstellung eines Signaturprüfschlüssels an jeden der Speicherdienste. Der Signaturprüfschlüssel ist zur Prüfung der von dem Signierschlüssel generierten Signaturen ausgebildet. Der Dateimanagementserver signiert das von jedem der identifizierten Speicherdienste empfangene Berechtigungstoken mit dem Signierschlüssel. Die Berechtigungstoken werden anschließend in signierter Form an das Nutzer-Computersystem weitergeleitet. Jedes der signierten Berechtigungstoken ermöglicht einem Empfänger dieses signierten Berechtigungstokens einen Zugriff auf einen durch das Berechtigungstoken identifizierten Speicherplatz auf dem Speichermedium des jeweiligen Speicherdienstes nur dann, wenn der jeweilige Speicherdienst die Signatur als valide erkennt. Die einzelnen Speicherdienste führen also vorzugsweise eine Signaturprüfung durch um die Sicherheit der durch sie gespeicherten Daten weiter zu erhöhen. Die Signierung der Berechtigungstoken erfolgt ebenfalls sowohl für Berechtigungstoken, die einen Lesezugriff auf eine bereits verteilt gespeicherte Datei ermöglichen wie auch für Berechtigungstoken die einen Schreibzugriff zur verteilten Speicherung einer Datei gewähren.

Nach Ausführungsformen umfasst das Verfahren ferner:
- Empfang, durch den Dateimanagementserver, einer Zugriffs-Anfrage eines weiteren Nutzer-Computersystems zum Zugriff auf die verteilt gespeicherte Datei;
- Identifikation der Speicherdienste, die Dateifragmente der Datei gespeichert haben anhand der Metadaten der Datei durch den Dateimanagementserver;
- Prüfung durch den Dateimanagementserver ob ein weiterer Nutzer, dem das weitere Nutzer-Computersystem zugeordnet ist, Zugriffsrechte für den Typ des angeforderten Zugriffs und für die Datei besitzt; der Typ des angeforderten Zugriffs kann zum Beispiel ein Schreibzugriff oder ein Lesezugriff sein; mancher Ausführungsformen können weiterhin unterscheiden zwischen Schreibzugriff, Modifikationszugriff, Löschzugriff, Lesezugriff;
- Authentifizierung des weiteren Nutzer-Computersystems gegenüber dem Dateimanagementserver;
- Nach erfolgreicher Authentifizierung und falls der weitere Nutzer die Zugriffsrechte für die Datei besitzt, Anforderung eines weiteren Berechtigungstokens durch den Dateimanagementserver von jedem der anhand der Metadaten identifizierten Speicherdienste und Weiterleitung der in Antwort auf diese Anforderung erhaltenen weiteren Berechtigungstoken durch den Dateimanagementserver an das weitere Nutzer-Computersystem, wobei die weiteren Berechtigungstoken dem weiteren Nutzer-Computersystem den angeforderten Zugriff auf die durch die Speicherdienste jeweils gespeicherten Dateifragmente in direkter Form ermöglichen.

Dass der Zugriff weiterer Nutzer auf die gespeicherte Datei der Kontrolle des Dateimanagementservers und nicht der einzelnen Speicherdienste unterliegt kann vorteilhaft sein, da zum einen eine Registrierung der weiteren Nutzer bei den einzelnen Speicherdiensten nicht erforderlich ist und zum anderen die Sicherheit der gespeicherten Daten erhöht wird, da eine strikte Trennung von Nutzer-und Berechtigungsmanagement einerseits und Dateispeicherung andererseits gewährleistet werden kann.

Nach Ausführungsformen prüft der Dateimanagementserver, ob das zur Authentifizierung des weiteren Nutzers gegenüber dem Dateimanagementserver verwendete Authentifizierungsverfahren hinreichend verlässlich ist, um das von dem Nutzer in den Anforderungen konfigurierte Mindestvertrauensniveau für den angeforderten Zugriff (zum Beispiel Lesezugriff oder Schreibzugriff) zu erfüllen. Die Anforderung des weiteren Berechtigungstokens wird nur dann von dem Dateimanagementserver an die identifizierten Speicherdienste gesendet, falls der weitere Nutzer sich erfolgreich gegenüber dem Dateimanagementserver authentifiziert hat, Zugriffsrechte für die angeforderte Datei besitzt und das verwendete Authentifizierungsverfahren ein Vertrauensniveau hat, welches mindestens so hoch ist wie das in der Konfiguration des Nutzers, dem die Datei gehört, spezifizierte Mindestvertrauensniveau. Dies kann vorteilhaft sein, weil durch die Berücksichtigung des Vertrauensniveaus einzelne Dateien einen besonders hohen Zugriffsschutz erhalten können.

Nach Ausführungsformen enthält die Konfiguration des Nutzers eine Angabe eines Typs von Computern, welcher allein berechtigt ist, auf Daten, die der Nutzer in den Speichermedien der identifizierten Dienste gespeichert hat, zuzugreifen. Die Anforderung des weiteren Berechtigungstokens wird nur dann von dem Dateimanagementserver an die identifizierten Speicherdienste gesendet, falls das weitere Nutzer-Computersystem, von welchem der weitere Nutzer die Zugriffs-Anfrage an den Dateimanagementserver versendet hat, die besagte Angabe des allein berechtigten Computertyps erfüllt.

Unter einem "Typ" von Computern wird im Folgenden eine Menge von Computern verstanden, welche zumindest ein Merkmal gemein haben, welches Einfluss auf die Integrität der von dem Computer verarbeiteten Daten und/oder auf die Integrität der von dieser Menge Computer ausgeführten Programme hat und welche diesen Typ von Computern von anderen Computern abgrenzt, welche dieses Merkmal nicht besitzen. Zu dem zumindest einen Merkmal könnte gehören, dass das Computersystem immobil ist, da bei mobilen Geräten von einer erhöhten Gefahr des Verlusts und damit der Offenbarung oder Kompromittierung der auf diesem Computersystem gespeicherten Daten und Programme ausgegangen werden muss. Zu dem zumindest einen Merkmal könnte gehören, ob das Computersystem bestimmte Sicherheitsvorkehrungen wie z.B. Virenscanner oder eine Firewall besitzt oder eine Authentifizierung des Nutzers mittels eines Hardwaretokens erfordert. Diese Merkmale können also vorteilhaft sein, weil ein Nutzer für jede einzelne seiner Dateien spezifizieren kann, dass ein anderer Nutzer beispielsweise nur von seinem Arbeitsplatz-Rechner auf diese Datei zugreifen kann, nicht jedoch von seinem Mobiltelefon oder mobilen Rechner aus.

Nach Ausführungsformen verwaltet der Dateimanagementserver ein Nutzerprofil des Nutzers, dem das Nutzer-Computersystem zugeordnet ist. Das Nutzerprofil enthält einen öffentlichen Schlüssel, der zusammen mit einem privaten Verschlüsselungsschlüssel ein asymmetrisches kryptographisches Schlüsselpaar bildet. Der besagte private Verschlüsselungsschlüssel dient zur Entschlüsselung der Metadaten der Datei, da diese mit dem öffentlichen Schlüssel der berechtigten Nutzer/ihrer Geräte verschlüsselt werden. Falls sich der weitere Nutzer, der Zugriff zu der Datei begehrt, erfolgreich gegenüber dem Dateimanagementserver authentifiziert hat und falls der weitere Nutzer die Zugriffsrechte für die Datei besitzt, sendet der Dateimanagementserver den öffentlichen Schlüssel des weiteren Nutzers an das Nutzer-Computersystem, das die Datei ursprünglich fragmentiert und verteilt gespeichert hatte, um dem Nutzer-Computersystem eine Verschlüsselung des symmetrischen Schlüssels, der zur Verschlüsselung der Dateifragmente verwendet wurde, mit dem öffentlichen Schlüssel zu ermöglichen. Der Dateimanagementserver empfängt die Metadaten der Datei mit dem verschlüsselten symmetrischen Schlüssel von dem Nutzer-Computersystem und leitet diese an das weitere Nutzer-Computersystem weiter, um dem weiteren Nutzer-Computersystem eine Entschlüsselung der Metadaten oder des symmetrischen Schlüssels innerhalb der Metadaten mit dem privaten Schlüssel des weiteren Nutzer-Computersystems zu ermöglichen und um eine Rekonstruktion der Datei aus den entschlüsselten Dateifragmenten zu ermöglichen. Die Dateirekonstruktion kann zum Beispiel eine Entschlüsselung der verschlüsselten Dateifragmente mittels eines in den entschlüsselten Metadaten enthaltenen symmetrischen kryptographischen Schlüssels, der identisch ist mit dem Hashwert der ursprünglichen Datei, beinhalten.

Alternativ dazu kann es sein, dass eine Version der Metadaten, die für das berechtigte Nutzer-Computersystem bei dessen erster erfolgreicher Zugriffsanfrage bezüglich der Datei generiert und verschlüsselt wurde, von dem DMB gespeichert wurden und dort also bereits lokal vorliegen. In diesem Fall identifiziert der DMS diese Version der Metadaten automatisch als dem anfragenden, berechtigten Nutzer-Computersystem zugehörig und leitet sie an das berechtigte weitere Nutzer-Computersystem weiter. Der Zugriff auf die lokal vom DMS gespeicherte Version ersetzt eine Interaktion mit dem Nutzer-Computersystem des Dateieigentümers. Dadurch kann das Verfahren beschleunigt und der Datenverkehr über das Netzwerk reduziert werden.

Nach Ausführungsformen ist in dem Nutzer-Computersystem ein privater kryptographischer Schlüssel geschützt gespeichert, der weder an den Dateimanagementserver noch an ein anderes Nutzer-Computersystem kommuniziert wird. Der private Schlüssel, hier auch 'privater asymmetrischer Schlüssel' genannt, bildet mit einem zugehörigen öffentlichen Schlüssel ein asymmetrisches kryptographisches Schlüsselpaar. Beispielsweise kann das Schlüsselpaar im Zuge der Installation einer Client-Applikation auf dem Nutzer-Computersystem generiert werden und dabei dem Nutzer eindeutig zugeordnet werden. Dies kann z.B. beinhalten, dass der zugehörige öffentliche Schlüssel von dem Nutzer-Computersystem an den Dateimanagementserver übertragen und dort als Bestandteil des Nutzerprofils des Nutzers dieses Nutzer-Computersystems gespeichert wird. In entsprechender Weise kann auch anderen Nutzer-Computersystemen jeweils ein asymmetrisches kryptographisches Schlüsselpaar zugeordnet sein.

Nach manchen Ausführungsformen verwendet und/oder generiert das Nutzercomputersystem, das die Datei verteilt in den Speicherdiensten speichert, einen symmetrischen Schlüssel, um die Dateifragmente der Datei vor deren Übertragung an die Speicherdienste zu verschlüsseln. Der symmetrische Schlüssel kann z.B. ein dynamisch berechneter Hashwert der zu speichernden Datei sein. Eine Verschlüsselung mittels eines symmetrischen Schlüssels kann z.B. den Effekt haben, die Performance der Verschlüsselung zu erhöhen. Der symmetrische Schlüssel wird anschließend durch das Nutzer-Computersystem als Bestandteil der Metadaten, die zur Rekonstruktion der Datei notwendig sind, verwendet. Die Metadaten mit dem symmetrischen Schlüssel werden von dem Nutzer-Computersystem zunächst lokal in einem Speicher des Nutzer-Computersystems gespeichert während die verschlüsselten Dateifragmente über das Netzwerk in den Speicherdiensten gespeichert werden wie zuvor beschrieben. Kein anderes Nutzer-Computersystem und auch nicht der Dateimanagementserver kann auf die verteilt gespeicherte Datei zugreifen da diese nicht in Besitz der Metadaten sind. Nach manchen Ausführungsformen, in welchen die Metadaten in einer oder mehreren Versionen lokal vom DBMS vorgehalten werden, kann der DMS zumindest die der Datei zu Grunde liegenden Dateifragmente nicht entschlüsseln, da die Metadaten oder zumindest der in diesen enthaltene symmetrische Schlüssel mit dem öffentlichen Schlüssel eines berechtigten Nutzer-Computersystems verschlüsselt ist und der DMS nicht im Besitz des entsprechenden privaten Schlüssels ist.

Der Dateimanagementserver kann einem anderen Nutzer-Computersystem, das Zugriff auf die besagte, von dem Nutzer-Computersystem verteilt gespeicherten Datei anfordert, durch folgende Schritte Zugriff auf die Datei ermöglichen:
- zunächst erfolgt eine Prüfung der Berechtigung des anderen Nutzer-Computersystems durch den Dateimanagementserver um festzustellen ob das andere Nutzer-Computersystem zum Zugriff auf die Datei berechtigt ist.
- Falls das andere Nutzer-Computersystem zum Zugriff berechtigt ist, wird ein öffentlicher kryptographischer Schlüssel, der dem anderen Nutzer-Computersystem zugeordnet ist, von dem Dateimanagementserver an das Nutzer-Computersystem über das Netzwerk übertragen. Der öffentliche Schlüssel des anderen Nutzer-Computersystems kann z.B. im Nutzerprofil eines anderen Nutzers, dem das andere Nutzer-Computersystem zugeordnet ist, gespeichert sein oder kann bereits vorab oder zusammen mit der Berechtigungsanfrage des anderen Nutzer-Computersystems über das Netzwerk von dem anderen Nutzer-Computersystem an den Dateimanagementserver übertragen worden sein.
- Das Nutzer-Computersystem, das die Datei ursprünglich verteilt gespeichert hatte und die Metadaten besitzt, empfängt den öffentlichen Schlüssel des anderen Nutzer-Computersystems von dem Dateimanagementserver;
- Das Nutzer-Computersystem verwendet den empfangenen öffentlichen Schlüssel um zumindest den symmetrischen Schlüssel, der zur Verschlüsselung der Dateifragmente verwendet wurde, zu verschlüsseln. Vorzugsweise sind die übrigen Metadaten, z.B. Informationen in welchen Speicherdiensten und Speicherdienstpfaden die Dateifragmente gespeichert sind, nicht verschlüsselt oder mit einem öffentlichen Schlüssel des Dateimanagementservers verschlüsselt; Die Metadaten enthalten also nun den symmetrischen Schlüssel in verschlüsselter Form;
- Die Metadaten mit dem verschlüsselten symmetrischen Schlüssel werden von dem Nutzer-Computersystem an den Dateimanagementserver übermittelt;
- Der Dateimanagementserver analysiert die empfangenen Metadaten um anhand diejenigen Speicherdienste zu identifizieren, in welchen die zur Widerherstellung der Ausgansdaten notwendigen Dateifragmente gespeichert wurden;
- Der DMS identifiziert Berechtigungstoken zum Zugriff auf die Datenfragmete der Datei und leitet die identifizierten Berechtigungstoken an das berechtigte andere Nutzer-Computersystem. Dies kann z.B. dadurch geschehen, dass der DMS auf lokal gespeicherte Berechtigungstoken für die Dateifragmente der Datei zugreift. Die lokal gespeicherten Berechtigungstoken können z.B. im Zuge des Schreibens der Dateifragmente von den Speicherdiensten generiert und an den DMS übermittelt worden sein. Alternativ dazu können die Berechtigungstoken vom DMS in Antwort auf die Zugriffsanfrage des anderen Nutzer-Computersystems neu von den einzelnen Speicherdiensten angefordert und empfangen worden sein.
- Der Dateimanagementserver kann jedoch, obwohl er im Besitz der Berechtigungstoken ist, die Metadaten nicht verwenden um den Inhalt der ursprünglichen Datei zu rekonstruieren, da der symmetrische Schlüssel innerhalb der Metadaten ja mit dem öffentlichen Schlüssel des anfragenden anderen Nutzer-Computersystems verschlüsselt ist. Die Verschlüsselung des symmetrischen Schlüssels und sichere Aufbewahrung des privaten Entschlüsselungsschlüssels auf Nutzer-Computersystemseite schützt die Datei vor Zugriff durch den Dateimanagementserver;
- Der Dateimanagementserver übermittelt die Metadaten oder zumindest den verschlüsselten symmetrischen Schlüssel der Metadaten an das anfragende andere Nutzer-Computersystem; dies kann z.B. zusammen mit der Übermittlung der Berechtigungstoken zum Zugriff auf die Dateifragmente an das andere Nutzer-Computersystem oder in einer separaten Nachricht erfolgen;
- Das andere Nutzer-Computersystem empfängt die Berechtigungstoken und empfängt die Metadaten oder zumindest den verschlüsselten symmetrischen Schlüssel der Metadaten;
- Das andere Nutzer-Computersystem entschlüsselt den verschlüsselten symmetrischen Schlüssel mit Hilfe seines privaten Schlüssels, der in dem anderen Nutzer-Computersystem geschützt gespeichert ist und der zusammen mit dem öffentlichen Schlüssel, der zur Verschlüsselung des symmetrischen Schlüssels verwendet wurde, ein asymmetrisches kryptographisches Schlüsselpaar bildet;
- Das andere Nutzer-Computersystem kann wie bereits für mehrere Ausführungsformen beschrieben mittels der Berechtigungstoken die verschlüsselt gespeicherten Dateifragmente von den Speicherdiensten herunterladen und mittels der ebenfalls empfangenen Metadaten die ursprüngliche Datei rekonstruieren. Hierzu entschlüsselt das andere Nutzer-Computersystem mit seinem privaten Schlüssel den verschlüsselten symmetrischen Schlüssel und verwendet den entschlüsselten symmetrischen Schlüssel zur Entschlüsselung der verschlüsselt empfangenen Dateifragmente.

Dies kann vorteilhaft sein, da nur der Eigentümer und die von diesem im Hinblick auf individuelle Dateien ermächtigten Nutzer-Computersysteme Dateifragmente entschlüsseln können. Der Dateimanagementserver oder unberechtigte Nutzer-Computersysteme haben keine Möglichkeit, auf die Inhalte einer Datei oder deren Fragmente zuzugreifen. Neben dem Nutzer-Computersystem und dem anderen Nutzer-Computersystem können noch mehrere weitere Nutzer-Computersysteme bei dem Dateimanagementserver registriert sein. In deren Speichermedien können jeweils einen privaten asymmetrischen Schlüssel so gespeichert sein, dass diese privaten Schlüssel vor dem Zugriff anderer Nutzer-Computersysteme und vor dem Zugriff des Dateimanagementservers geschützt sind. Dies kann vorteilhaft sein, da der Dateimanagementserver dadurch keine Möglichkeit bekommt, diese zur Entschlüsselung der symmetrischen Schlüssel der Metadaten, die an den Dateimanagementserver übertragen wurden, zu verwenden.

Nach Ausführungsformen verwaltet der Dateimanagementserver für jede gespeicherte Datei ein oder mehrere Versionen von Metadaten. Eine dieser Versionen enthält einen symmetrischen Schlüssel, der zur Verschlüsselung der aus der Datei generierten Dateifragmente diente, und der von einem öffentlichen Schlüssel des Nutzer-Computersystems das die Datei verteilt speicherte, verschlüsselt ist. Eine andere der Versionen enthält im wesentlichen die gleichen Daten, wobei allerdings der symmetrischen Schlüssel von einem öffentlichen Schlüssel eines weiteren Nutzer-Computersystems, das von dem Dateimanagementserver als zum Zugriff auf die Datei berechtigt identifiziert wurde, verschlüsselt ist.

Nach Ausführungsformen gehört das Nutzer-Computersystem einem Nutzer, dem noch zumindest ein weiteres Nutzer-Computersystem zugeordnet ist. Das Verfahren umfasst:
- Nach der verteilten Speicherung der Datei durch das Nutzer-Computersystem und nach der Übertragung der für diese Datei generierten Metadaten an den Dateimanagementserver, Registrierung des weiteren Computersystems bei dem Dateimanagementserver als ein dem Eigentümer der Datei zugeordnetes Nutzer-Computersystem.
- Empfang eines öffentlichen Schlüssels, der dem weiteren Nutzer-Computersystem zugeordnet ist, durch den Dateimanagementserver. Der öffentliche Schlüssel kann z.B. im Zuge der Installation einer mit einer Dateimanagement-Applikation des Dateimanagementservers interoperativen Client-Applikation durch die Client-Applikation des weiteren Nutzer-Computersystems automatisch generiert werden.
- Zuordnung des empfangenen öffentlichen Schlüssels zu den Nutzer und zu dem weiteren Nutzer-Computersystem in den Profildaten des Nutzers durch den Dateimanagementserver; dies kann z.B. im Zuge der Registrierung und vorzugsweise nach einer Bestätigung durch den Nutzer, dass das weitere Nutzer-Computersystem für diesen registriert werden soll, automatisch erfolgen;
- Automatisches Senden einer Anfrage zum Erhalt einer weiteren Version von Metadaten für das registrierte weitere Nutzer-Computersystem von dem Dateimanagementserver an das Nutzer-Computersystem, das die Datei ursprünglich in verteilter Form gespeichert hatte, wobei die Anfrage den zugeordneten öffentlichen Schlüssel enthält;
- In Antwort auf den Erhalt der Anfrage, automatische Erzeugung einer weiteren Version der Metadaten, die eine Rekonstruktion der Datei ermöglichen, wobei die weitere Version der Metadaten oder Teile der weiteren Version der Metadaten mit dem öffentlichen Schlüssel in der Anfrage verschlüsselt werden; insbesondere kann der symmetrische Schlüssel, der von dem Nutzer-Computersystem zur Verschlüsselung der Dateifragmente verwendet wurde, mit dem öffentlichen Schlüssel der Anfrage verschlüsselt werden;
- Senden der weiteren Version der Metadaten von dem Nutzer-Computersystem an den Dateimanagementserver; und
- Speicherung der weiteren Version der Metadaten durch den Dateimanagementserver.

Dies kann vorteilhaft sein, da im Zuge einer Registrierung weiterer Nutzer-Computersysteme für einen bereits registrierten Nutzer sämtliche Dateien, die der Nutzer mittels seines bereits zuvor registrierten Nutzer-Computersystems bereits erzeugt und verteilt gespeichert hat, automatisch auch weitere Versionen der Metadaten dieser Dateien generiert werden, die dem Nutzer auch Zugriff über das weitere registrierte Nutzer-Computersystem ermöglichen, ohne dass der Nutzer hierzu noch manuell tätig werden muss. Vorzugsweise wird die Anfrage zum Erhalt einer weiteren Version von Metadaten für das registrierte weitere Nutzer-Computersystem dateispezifisch und nur dann generiert, wenn der Dateimanagementserver feststellt, dass das weitere Nutzer-Computersystem auch zum Zugriff auf diese Datei berechtigt ist. Dies kann z.B. vom Typ des weiteren Nutzercomputersystems abhängen, also z.B. davon, ob das weitere Nutzer-Computersystem mobil oder immobil ist oder ob es zu einer Liste von berechtigten Arbeitsplatzrechnern gehört, die z.B. über ihre MAC oder IP Adresse als solche identifizierbar sind.

In einem weiteren Aspekt betrifft die Erfindung ein computerlesbares Speichermedium mit computerlesbaren Instruktionen welche bei Ausführung durch einen Prozessor den Prozessor zur Durchführung des Verfahrens nach einem der vorigen Ansprüche veranlassen. Das computerlesbare Speichermedium kann auch aus einer Kombination mehrerer computerlesbarer Speichermedien bestehen.

In einem weiteren Aspekt betrifft die Erfindung ein Nutzer-Computersystem umfassend einen Prozessor und eine Netzwerkschnittstelle zur operativen Kopplung des Nutzer-Computersystems an eine Vielzahl von Speicherdiensten und an einen Dateimanagementserver über ein Netzwerk. Das Nutzer-Computersystem umfasst ein Speichermedium mit einer von dem Prozessor ausführbaren Client-Applikation, die zur Ausführung folgenden Verfahrens zur Speicherung einer Datei konfiguriert ist:
- Verwenden eines Verteilungsplans, der Instruktionen zur Generierung von Dateifragmenten der Datei mittels eines Fehlerkorrekturverfahrens und Identifikatoren von mehreren Speicherdiensten, in deren nichtflüchtigen Speichermedien die generierten Dateifragmente gespeichert werden sollen, enthält, wobei der Dateimanagementserver keinen Speicherdienst bereitstellt;
- Durchführung des in dem Verteilungsplan spezifizierten Fehlerkorrekturverfahrens zur Generierung der Dateifragmente der Datei, wobei die Dateifragmente Fehlerkorrektur-Bits beinhalten;
- Senden einer Berechtigungsanfrage des Nutzer-Computersystems zum Speichern der Dateifragmente in den im Verteilungsplan identifizierten mehreren Speicherdiensten an den Dateimanagementserver über ein Netzwerk;
- In Antwort auf das Senden der Berechtigungsanfrage, Empfang von Berechtigungstoken von dem Dateimanagementserver für jedes der in dem Verteilungsplan spezifizierten Speicherdienste; und
- Speicherung der generierten Dateifragmente über das Netzwerk in den Speichermedien der identifizierten Speicherdienste mittels Berechtigungsnachweis durch die Berechtigungstoken unter Umgehung des Dateimanagementservers durch das Nutzer-Computersystem.

Metadaten, die die Rekonstruktion der Datei aus den gespeicherten Dateifragmenten erlauben, sind gegen einen Zugriff der Speicherdienste gesichert. Die Metadaten können z.B. in dem Nutzer-Computersystem und/oder dem Dateimanagementserver gespeichert werden.

Nach manchen Ausführungsformen wird der Verteilungsplan von dem Nutzer-Computersystem generiert, nach anderen Ausführungsformen wird er durch den Dateimanagementserver generiert und an das Nutzer-Computersystem über das Netzwerk übertragen. In die Generierung des Verteilungsplans können auch Merkmale der zu speichernden Datei eingehen, wobei die Merkmale im Falle der serverseitigen Generierung des Verteilungsplans als Bestandteil einer Nachricht noch von dem Nutzer-Computersystem an den Dateimanagementserver über das Netzwerk übertragen werden.

In einem weiteren Aspekt betrifft die Erfindung einen Dateimanagementserver. Der Dateimanagementserver umfasst einen Prozessor und eine Netzwerkschnittstelle zur operativen Kopplung des Dateimanagementservers mit zumindest einem Nutzer-Computersystem eines Nutzers und mit einer Vielzahl von Speicherdiensten über ein Netzwerk. Der Dateimanagementserver umfasst ferner ein Speichermedium mit einer von dem Prozessor ausführbaren Dateimanagement-Applikation, die zur Ausführung folgenden Verfahrens zur Speicherung einer Datei konfiguriert ist:
- Empfang einer Berechtigungsanfrage des Nutzer-Computersystems zum Speichern von Dateifragmenten einer Datei über das Netzwerk in mehreren der Speicherdienste; und
- In Antwort auf den Empfang der Berechtigungsanfrage, Anforderung eines Berechtigungstokens von jedem der mehreren Speicherdienste und Weiterleitung der in Antwort auf die Anforderung erhaltenen Berechtigungstoken an das Nutzer-Computersystem.

Der Dateimanagementserver stellt keinen Speicherdienst bereit. Metadaten, die die Rekonstruktion der Datei aus den gespeicherten Dateifragmenten erlauben, sind gegen einen Zugriff der Speicherdienste gesichert. Die Metadaten können z.B. in dem Nutzer-Computersystem und/oder dem Dateimanagementserver gespeichert werden.

Nach Ausführungsformen sind Identifikatoren der mehreren Speicherdienste in einem Verteilungsplan spezifiziert. Der Verteilungsplan beinhaltet Instruktionen zur Generierung von Dateifragmenten der Datei mittels eines Fehlerkorrekturverfahrens. Der Dateimanagementserver kann ferner konfiguriert zu:
- automatische Generierung des Verteilungsplans, der Instruktionen zur Generierung von Dateifragmenten der Datei mittels eines Fehlerkorrekturverfahrens und Identifikatoren der mehreren Speicherdienste, in deren nichtflüchtigen Speichermedien die generierten Dateifragmente gespeichert werden sollen, enthält;
- Übertragung des Verteilungsplans an das Nutzer-Computersystem um diesem die Durchführung des in dem Verteilungsplan spezifizierten Fehlerkorrekturverfahrens zur Generierung der Dateifragmente zu ermöglichen.

Ein *"Verteilungsplan"* im Sinne der vorliegenden Erfindung ist eine Spezifikation, welche zumindest Angaben über die Identität derjenigen Speicherdienste enthält, über welche Fragmente einer Datei gespeichert werden sollen sowie Angaben enthält, die einen Fehlerkorrekturverfahren festlegen, welches zur Generierung dieser Dateifragmente aus der besagten Datei verwendet werden soll. Ein Verteilungsplan kann z.B. als XML Datei oder binäre Datei ausgebildet sein.

Ein *"Dateimanagementserver"* ist ein Computersystem, welches eine Schnittstelle zur Kommunikation mit ein oder mehreren Nutzer-Computersystemen und zur Kommunikation mit mehreren Speicherdiensten besitzt um den ein oder mehreren Nutzer-Computersystemen Zugriffsrechte auf von diesen Speicherdiensten verwaltete Speichermedien zu vermitteln. Der Dateimanagementserver stellt dabei selbst keinen Speicherdienst bereit und ist vorzugsweise auch von den Speicherdiensten durch sicherheitstechnische Maßnahmen getrennt, welche dafür sorgen, dass keiner dieser Speicherdienste Zugriff auf von dem Dateimanagementserver verwaltete Daten, insbesondere z.B. Nutzerprofile und Metadaten, hat. Der Dateimanagementserver kann aus einem Datenverarbeitungsgerät bestehen oder aus mehreren Datenverarbeitungsgeräten, insbesondere Computern, bestehen, die zusammenwirken und gemeinsam verwaltet werden um die Funktionalität des Dateimanagementservers gemäß den oben beschriebenen Ausführungsformen bereitzustellen.

Ein *"Berechtigungstoken"* ist eine Datenstruktur, z.B. eine Datei oder eine URL, welche Informationen beinhaltet, die einer Instanz, die im Besitz dieses Berechtigungstokens ist, eine Berechtigung zum Zugriff auf Speicherbereiche externer Speichermedien einräumt. Die externen Speichermedien können z.B. von einem Speicherdienst über ein Netzwerk wie z.B. das Internet bereitgestellt werden. Nach Ausführungsformen kann das Berechtigungstoken sowohl einen Zeiger als auch einen Berechtigungsausweis enthalten. Der Zeiger kann z.B. aus einer Kombination aus einer IP Adresse eines Speicherdienstes und eines Dateipfades eines von diesem Speicherdienst verwalteten Speichermediums bestehen. Der Berechtigungsausweis kann z.B. ein oder mehrere Datenwerte beinhalten, die den Besitzer des Berechtigungstokens als zugriffsberechtigt ausweisen, z.B. einen von dem Speicherdienst generierten Zufallswert der mit einem Referenzwert verglichen werden kann. Die besagten Datenwerte können auch eine Signatur umfassen.

Ein *"Speicherdienst"* ist ein über ein Netzwert bereitgestellter Dienst, der es ein oder mehreren Nutzer-Computersystemen ermöglicht, Daten über das Netzwerk an den Dienst zu senden damit diese von dem Speicherdienst auf ein oder mehreren von dem Speicherdienst verwalteten Speichermedien gespeichert werden, und/oder der es den Nutzer-Computersystemen ermöglicht, auf bereits von diesem oder einem anderen Nutzer-Computersystem gespeicherte Daten über das Netzwerk - z.B. lesend oder schreibend - zuzugreifen. Ein einzelner Speicherdienst ist dabei von jedem anderen Speicherdienst vorzugsweise technisch und organisatorisch getrennt. Nach Ausführungsformen ist jeder der Speicherdienste dazu konfiguriert, über eine Schnittstelle Daten von dem Nutzer-Computersystem über das Netzwerk zu empfangen und diese in seinem nicht flüchtigen Speichermedium zu speichern.

Unter einem *"Nutzer-Computersystem"* wird im Folgenden ein Datenverarbeitungssystem, z.B. ein Desktop-PC, ein Notebook oder ein Smartphone verstanden, welches einem Nutzer zugeordnet ist.

Eine *"Sicht"* ist eine dynamisch generierte visuelle Repräsentation von Daten, insbesondere von ein oder mehreren Dateien. Nach Ausführungsformen beinhaltet die Sicht eine Liste oder sonstige Anordnung von mehreren Dateien, wobei jede Datei unter ihrem ursprünglichen Dateinamen, optional ergänzt durch weitere dateibezogene Daten wie etwa Dateigröße, Datum der letzten Änderung, Dateityp etc., in der Sicht angezeigt wird. Die dynamisch generierte visuelle Repräsentation kann auf einem komplexen Datenverarbeitungsprozess z.B. von Metadaten mehrerer Dateien beruhen, die eine automatische Entschlüsselung und Verarbeitung von Metadaten mehrerer verteilt gespeicherter Dateien umfasst.

Unter einem *"Vertrauensniveau"* wird im Folgenden eine Menge von ein oder mehreren Parameterwerten verstanden, welche einen Grad der Vertrauenswürdigkeit in Bezug darauf angibt, ob ein Nutzer, der sich mit einem ihm zugeordneten Nutzer-Computersystem gegenüber dem Dateimanagementserver authentifiziert hat, auch tatsächlich derjenige ist, der er durch Bereitstellung seiner Authentifizierungsdaten vorgibt zu sein.

Ein *"Fehlerkorrekturbit"* oder *"Paritätsbit"* ist ein Bit, welches zusätzlich zu ein oder mehreren Bits der eigentlichen Nutzdaten generiert und ggf. an einen Empfänger übertragen wird, und welches zur Kontrolle der Integrität der besagten ein oder mehreren Bits der Nutzdaten während der Übertragung an den Empfänger dient.

Ein *"Fehlerkorrekturverfahren"* ist ein Verfahren, welches dazu dient, Fehler bei der Speicherung und Übertragung von Daten zu erkennen und zu korrigieren, wobei ein Fehler auch darin bestehen kann, dass Teile einer logisch zusammenhängenden Datenmenge (z.B. eine Datei) temporär oder dauerhaft nicht verfügbar sind, z.B. wegen Ausfalls eines Speichermediums, das diese Teile gespeichert hatte. Um dies zu erreichen fügen Fehlerkorrekturverfahren vor der Speicherung oder Übertragung von Nutzdaten diesen Nutzdaten zusätzliche Redundanz in Form zusätzlicher Fehlerkorrekturbits hinzu, die zur Bestimmung von Fehlern und Fehlerpositionen und auch zur Rekonstruktion fehlender Teile der Nutzdaten genutzt werden können.

Nach Ausführungsformen ist auf jedem der Nutzer-Computersysteme eine Client-Applikation installiert, welche mit einer Dateimanagement-Applikation des Dateimanagementservers interoperabel ist. Die Clientapplikation kann Programlogik beinhalten, in welcher die von dem Nutzer-Computersystem ausgeführten Schritte des Verfahrens nach einer der vorgenannten Ausführungsformen codiert sind. Die Dateimanagement-Applikation kann Programlogik beinhalten, in welcher die von dem Dateimanagementserver ausgeführten Schritte des Verfahrens nach einer der vorgenannten Ausführungsformen codiert sind.

Im Weiteren werden Ausführungsformen der Erfindung mit Bezugnahme auf die Zeichnungen näher erläutert. Es zeigen:
- Figur 1: zeigt mehrere Nutzer-Computersysteme, Speicherdienste und einen Dateimanagementserver;
- Figur 2: ein Blockdiagramm eines der Nutzer-Computersysteme,
- Figur 3: ein Blockdiagramm des Dateimanagementservers,
- Figur 4: ein Ablaufschema der verteilten Speicherung einer Datei;
- Figur 5: ein Ablaufschema des Lesens einer verteilt gespeicherten Datei; und
- Figur 6: ein Flussdiagramm einer Ausführungsform eines erfindungsgemäßen Verfahrens.

Elemente der nachfolgenden Ausführungsformen, die einander entsprechen, werden mit denselben Bezugszeichen gekennzeichnet.

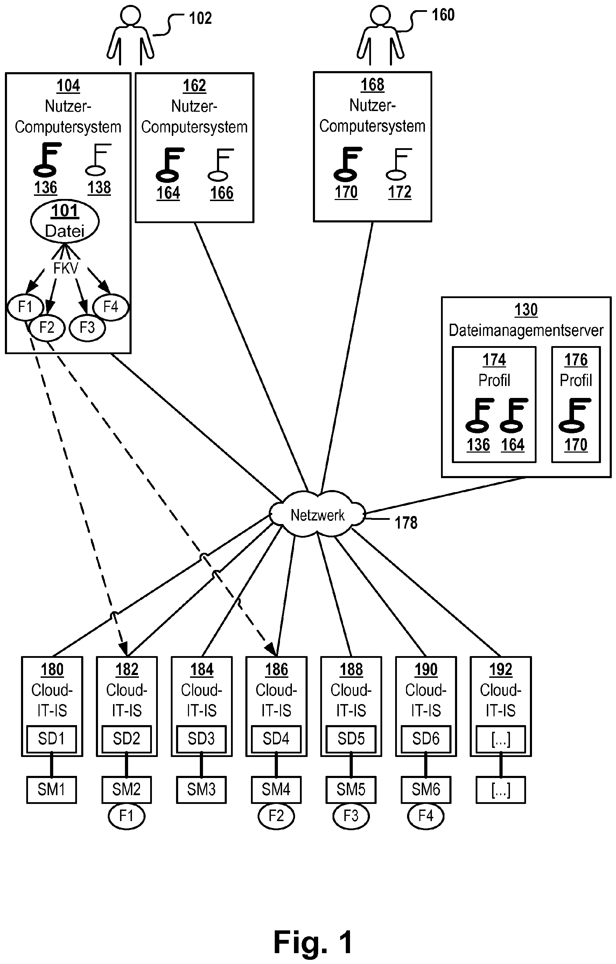

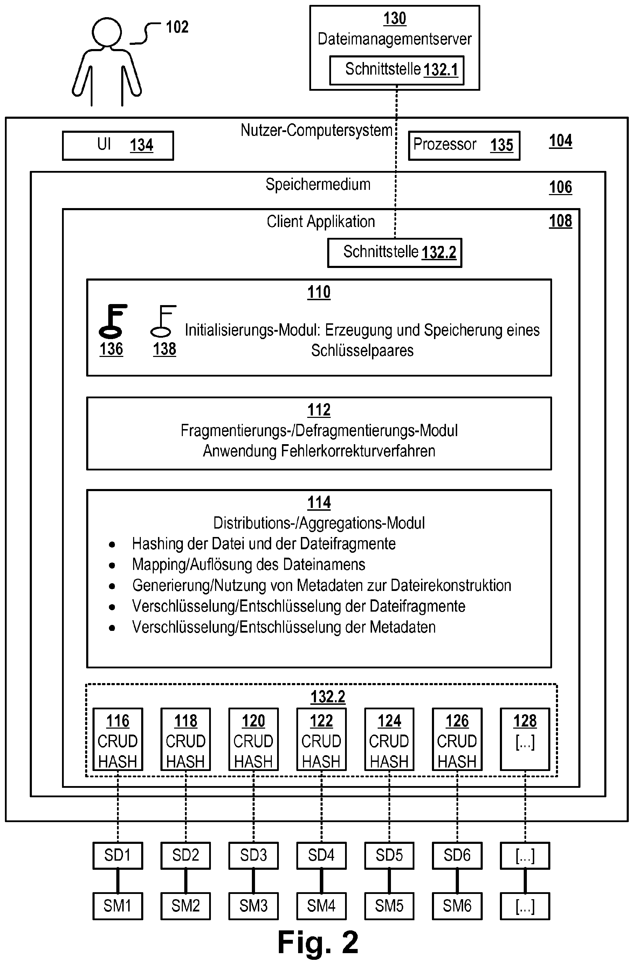

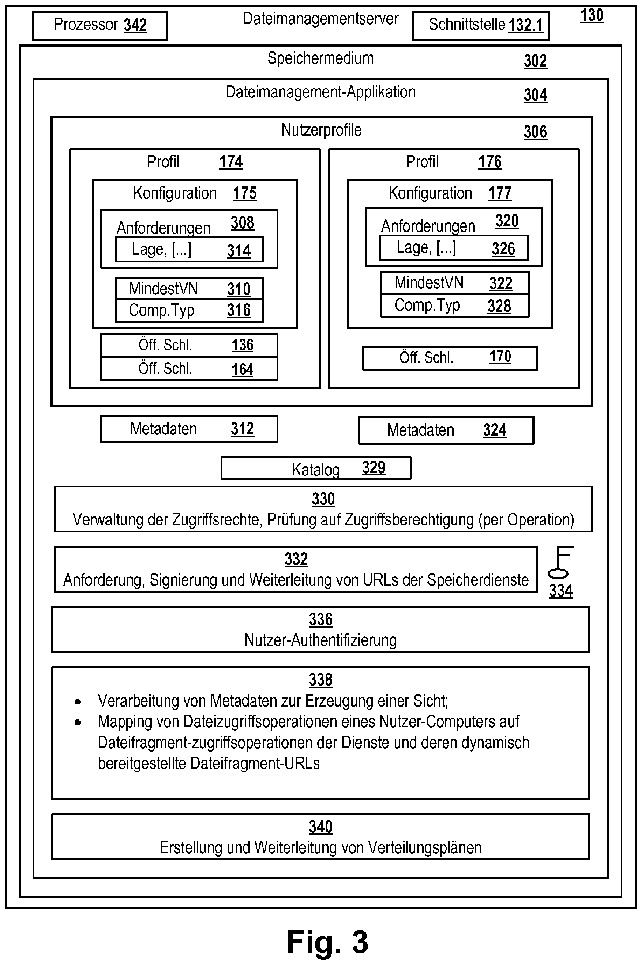

**Figur 1** zeigt ein verteiltes Computersystem zur Speicherung von Daten, das mehrere Nutzer-Computersysteme 104, 162, 168, mehrere Speicherdienste SD1-SD6 mit entsprechenden IT-Infrastrukturen 180-192 und Speichermedien SM1-SM6 und einen Dateimanagementserver 130 umfasst, die jeweils über ein Netzwerk 178 miteinander verbunden sind. Das System ermöglicht eine automatisierte und dynamische Bereitstellung von Speicherressourcen der einzelnen Speicherdienste, die zum Beispiel jeweils als öffentliche Cloud-Speicherdienste ausgebildet sein können. Die Auswahl der Speicherdienste erfolgt vorzugsweise dynamisch basierend auf Anforderungen, die ein Nutzer 102, 160 in einem zentral hinterlegten Nutzerprofil 174,176 hinterlegen kann, basierend auf bestimmten Merkmalen der zu speichernden Datei 101 und/oder basierend auf technischen und/oder organisatorischen Eigenschaften der jeweiligen Speicherdienste SD1-SD6, die beispielsweise zentral in einem Katalog 329 gespeichert sein können.
Dem Nutzer 102 können beispielsweise zwei Nutzer-Computersysteme 104, 162, zum Beispiel ein Desktop-Computer und ein Notebook, zugeordnet sein. Im Zuge der Installation einer Client-Applikation kann ein für jedes Nutzercomputersystemspezifisches asymmetrisches kryptographisches Schlüsselpaar generiert werden. Der private Schlüssel 138, 166 wird in dem jeweiligen Nutzer-Computersystem geschützt gespeichert. Die entsprechenden öffentlichen Schlüssel 136, 164 werden an den Dateimanagementserver übertragen und von diesem zentral verwaltet. So ist dem Nutzer 102 beispielsweise das Nutzerprofil 174 zugeordnet, welches die beiden öffentlichen Schlüssel 136 und 164 beinhaltet. Dem Nutzer 160 ist das Nutzerprofil 176 zugeordnet, welches den öffentlichen Schlüssel 170 beinhaltet. Der zu dem öffentlichen Schlüssel 170 korrespondierende private Schlüssel 172 ist auf dem weiteren Nutzer-Computersystem 168 geschützt gespeichert. Der Dateimanagementserver 130 agiert als zentrale Instanz zur Verwaltung von Nutzeraccounts, Nutzer-Anforderungen 308, 320 und zur Prüfung der Berechtigung einzelner Nutzer zur Durchführung einer dateibezogenen Zugriffsoperation. Wie dies im Einzelnen geschieht wird im Folgenden in den Figuren 2 und 3 näher erläutert. Die beiden gestrichelten Pfeile von Figur 1 deuten in Bezug auf die Dateifragmente F1 und F2 an, dass die durch das Fehlerkorrekturverfahren FKV aus der Datei 101 erzeugten Dateifragmente F1-F4 direkt, mithilfe eines Berechtigungstokens, unter Umgehung des Dateimanagementservers 130 gespeichert werden. Für den Erhalt der Berechtigungstoken, die von den einzelnen Speicherdiensten ausgestellt werden, ist jedoch eine Interaktion des Nutzer-Computersystems 104 mit dem Dateimanagementserver 130 erforderlich.

**Figur 2** zeigt ein Blockdiagramm des Nutzer-Computersystems 104. Das Nutzer-Computersystem beinhaltet eine Nutzer-Schnittstelle 134. Diese Schnittstelle kann zum Beispiel eine graphische Benutzeroberfläche beinhalten, die eine Sicht auf eine verteilt zu speichernde Datei 101 und/oder auf ein oder mehrere bereits verteilt gespeicherte Dateien anzeigt. Außerdem kann die Schnittstelle 134 Eingabemittel, zum Beispiel eine Tastatur oder Maus umfassen, die dem Nutzer erlaubt, einzelne Dateien auszuwählen oder in dem Nutzerprofil hinterlegte Daten und Anforderungen zu aktualisieren und/oder im Nutzerprofil 174 des Nutzers 102 festzulegen, welche Nutzer oder Nutzergruppen unter welchen Voraussetzungen zum Zugriff auf die Datei 101 berechtigt sein sollen. Das Nutzer-Computersystem 104 beinhaltet einen Prozessor 135 und ein nicht flüchtiges Speichermedium 106 auf welchem eine Client-Applikation 108 installiert ist, die über eine Schnittstelle 132 mit einer auf dem Dateimanagementserver 130 installierten Dateiverwaltungs-Applikation 304 kommuniziert. Die Client-Applikation 108 kann außerdem eine Schnittstelle 116-128 vorsehen, die standardisierte Dateioperationen ("CRUD": "CREATE", "READ", "UPDATE", "DELETE") definiert, die von jedem der Speicherdienste interpretiert und durchgeführt werden können. Bei den Schnittstellen 116-128 handelt es sich also letztlich um eine einheitliche Schnittstelle mit einheitlicher Methodensignatur für CRUD Operationen.

Die Applikation 108 beinhaltet ein Initialisierungsmodul 110, das zum Beispiel im Zuge der Installation der Applikation 108 auf dem Nutzer-Computersystem 104 das asymmetrische kryptographische Schlüsselpaar 136,138 erzeugt und den öffentlichen Schlüssel 136 über die Schnittstelle 132 an die Dateiverwaltungs-Applikation 304 übermittelt. Das Modul 110 erlaubt also die Erzeugung und sichere Verwaltung der öffentlichen und privaten Schlüssel 136, 138.

Außerdem kann die Client-Applikation 108 ein Fragmentierung-/Defragmentierungs-Modul 112 umfassen, dass eine Datei 101 durch Anwendung eines in einem Verteilungsplan spezifizierten Fehlerkorrekturverfahrens FKV in mehrere Dateifragmente F1-F4 zerlegen und mit Fehlerkorrekturbits anreichern kann. Falls ein oder mehrere der Speicherdienste, auf welchen Dateifragmente der Datei gespeichert sind, ausfallen sollten, kann die Defragmentierungs-Funktion des Moduls 112 aus den verbliebenen Dateifragmenten die ursprüngliche Datei regenerieren, sofern die in den übrigen Dateifragmenten enthaltenen Fehlerkorrekturbits hierfür ausreichen.

Ein weiteres Modul 114, hier als Distributions-/Aggregations-Modul bezeichnet, beinhaltet mehrere Funktionalitäten, die zur verteilten und sicheren Speicherung der von Modul 112 generierten Dateifragmente in den in dem Verteilungsplan spezifizierten Speicherdiensten SD2, SD4-SD6 dienen. Das Modul 114 kann zum Beispiel einen Hashwert der ursprünglichen Datei 101 berechnen und diesen als symmetrischen Schlüssel zur schnellen Verschlüsselung jedes der Dateifragmente F1-F4 der Datei 101 verwenden. Außerdem kann ein Hashwert jedes der generierten Dateifragmente F1-4 berechnet werden, die als Identifikatoren der Dateifragmente dienen und die dem ursprünglichen Dateinamen der Datei mittels eines "Mappings" zugeordnet werden. Die besagten Daten Hashwerte, der private Schlüssel und das Mapping können als Metadaten dienen um eine Rekonstruktion der Datei aus den Dateifragmenten zu ermöglichen. Außerdem können die Metadaten Identifikatoren und Pfade der Speicherdienste beinhalten, in welchen die Dateifragmente gespeichert wurden. Vorzugsweise werden die von einem Nutzer-Computersystem 104 erzeugten Metadaten 312 der Datei 101 zumindest teilweise durch einen öffentlichen Schlüssel 136, der dem Nutzer-Computersystem 104 und damit auch dem Nutzer 102 spezifisch zugeordnet ist, verschlüsselt und in verschlüsselter Form an den Dateimanagementserver 130 über das Netzwerk 178 übertragen. Falls das Nutzer-Computersystem zu einem späteren Zeitpunkt auf die verteilt gespeicherte Datei zugreifen soll, kann es die Metadaten von dem Dateimanagementserver empfangen und den verschlüsselten symmetrischen Schlüssel, der in den Metadaten enthalten ist, mittels seines privaten Schlüssels 138 entschlüsseln. Die Aggregations-Funktionalität des Moduls 114 erlaubt z.B. eine Rekonstruktion der ursprünglichen Datei 101 aus den Dateifragmenten F1-F4 unter Zuhilfenahme der Metadaten 312 und des privaten Schlüssels 138,der zur Entschlüsselung der mit dem öffentlichen Schlüssel 136 verschlüsselten Metadaten dient.

Der Dateimanagementserver 130 umfasst einen Prozessor 342 und ein Nichtflüchtiges Speichermedium 302, auf welchem eine Dateiverwaltungs-Applikation 304 installiert ist. Diese kann zur Verwaltung mehrerer Nutzerprofile 306, zum Beispiel Nutzerprofil 174 von Nutzer 102 oder Nutzerprofil 176 von Nutzer 160 dienen. Die Nutzer können in ihrem Nutzerprofil in einer Konfiguration 175 festlegen, welche Anforderungen 308 im Hinblick auf Kosten, geographische Lage, Datensicherheit und Datenverfügbarkeit bezüglich der von den Speicherdiensten SD1-SD6 jeweils verwendeter IT-Infrastrukturen enthält. Die Anforderungen 308 können auch einheitlich für ganze Nutzergruppen, zum Beispiel für Beschäftigte von Unternehmen, definiert sein. Dies kann vorteilhaft sein, da hierdurch unternehmenseinheitliche Vorgaben im Hinblick auf die Kosten, geographische Lage, Sicherheit und Verfügbarkeit der verteilt gespeicherten Dateien realisiert werden können. Außerdem kann der Nutzer 102 spezifizieren, welche anderen Nutzer oder Nutzergruppen unter welchen Bedingungen (z.B. im Hinblick auf ein Mindestvertrauensniveau 310 oder Typ 316 des verwendeten Nutzer-Computersystems) dem anderen Nutzer bzw. den anderen Nutzergruppen Zugriff auf eine Datei des Nutzers 102 durch den Dateimanagementserver gewährt werden soll.
Die Dateiverwaltungs-Applikation 304 kann also als zentrale Instanz die Nutzerprofile mehrerer Nutzer verwalten und auch die Vorgaben der Nutzer bezüglich der Zugriffsberechtigung andere Nutzer auf deren Dateien kontrollieren und umsetzen. Neben den Nutzerprofilen kann die Dateiverwaltungs-Applikation 304 auch die Metadaten 312, 324 einer Vielzahl von verteilt gespeicherten Dateien mehrerer Nutzer und/oder einen Katalog 329 mit den Spezifikationen aller zur Verfügung stehenden Speicherdienste SD1-SD6 verwalten.

Modul 330 der Dateiverwaltungs-Applikation 304 ist zum Beispiel für die zentrale Verwaltung der Zugriffsrechte und für die dateibezogene Prüfung auf Zugriffsberechtigung durch andere Nutzer verantwortlich. Ein Nutzer kann sich gegenüber der Dateiverwaltungs-Applikation 304 dadurch als berechtigt ausweisen, dass er seine Identität, die sich aus unterschiedlichen Attributen zusammensetzen kann (Name, E-Mail-Adresse, Bankkonto, Wohnadresse, Geburtsdatum, Nationalität etc.) gegenüber der Dateiverwaltungs-Applikation 304 in vertrauenswürdiger Weise nachweist. Die Echtheit dieser Attribute kann mit unterschiedlichem Aufwand bestätigt werden (z.B. ein Bankkonto durch eine Überweisung mit einem übermittelten Geheimnis im Feld "Verwendungszweck", Email durch die Übersendung einer Mail mit einem Bestätigungslink, Wohnort bzw. Geburtsdaten, oder durch sicheres Auslesen der Daten aus einem elektronischen Personalausweis). Das Modul 330 ordnet den unterschiedlichen Attributen ein bestimmter Vertrauenslevel zu. Dieser Wert bildet die Qualität der Identifizierung ab. Vorzugsweise verfügt das Modul 330 über eine graduelle Abstufung mehrerer Vertrauensniveaus bezüglich einer oder mehrerer digitaler Identitäten eines Nutzers. Damit können die Nutzer individuelle Anforderungen (Mindestvertrauensniveaus) im Hinblick auf die Vertrauenswürdigkeit der Identifizierung anderer Nutzer beim Zugriff auf eigene Dateien spezifizieren. Beim Teilen der Daten mit einem anderen Nutzer kann ein Nutzer ein Mindestvertrauensniveau festlegen, mit welchem sein Gegenpart identifiziert werden soll. Ob der andere Nutzer das geforderte Mindestvertrauensniveau erfüllt hängt also von dem Authentifizierungsverfahren des anderes Nutzer gegenüber dem Dateimanagementserver ab, mittels welchem der andere Nutzer seine digitale Identität nachweist (also z.B. Nutzername/Passwort, Email-Adresse, elektronischem Personalausweis oder ein anderes Sicherheitstoken wie beispielsweise FID).

Modul 332 dient dazu, nachdem ein Nutzer seine Berechtigung zum Zugriff auf eine Datei gegenüber der Dateiverwaltungs-Applikation nachgewiesen hat, Berechtigungstoken von den in dem Verteilungsplan (bei initialem Schreibzugriff) oder den Metadaten (bei Lesezugriff, bei einer UPDATE oder DELETE-Operation) spezifizierten Speicherdiensten anzufordern. Die Berechtigungstoken werden mit einem Signierungsschlüssel 334 der Dateiverwaltungs-Applikation signiert und in signierter Form an das Nutzer-Computersystem, von welchem eine entsprechende Berechtigung-Anfrage zum Dateizugriff empfangen wurde, gesendet.

Modul 338 verwaltet Metadaten einer Vielzahl von Dateien, die von Nutzern generiert worden, die sich bei der Dateiverwaltungs-Applikation registriert haben. Das Modul 338 kann anhand der Metadaten eine Sicht auf die verteilt gespeicherten Dateien generieren und den Nutzer-Computersystemen 104, 162, 168 über das Netzwerk 178 zur Verfügung stellen ohne jedoch Zugriff auf den Inhalt der Dateien zu besitzen. Ferner kann der Server 130 ein Modul 340 umfassen. Dieses ermöglicht eine dynamische Erstellung und Weiterleitung von Verteilungsplänen zur verteilten Speicherung einer Datei 101, wobei in dem Verteilungsplan ein Fehlerkorrekturverfahren FKV spezifiziert ist sowie mehrere Speicherdienste SD1-SD6, wobei sowohl das besagte Fehlerkorrekturverfahren als auch die besagten Speicherdienste dynamisch so ausgewählt werden, dass die Anforderungen 308, 320 des Nutzers, der die Datei verteilt speichern möchte, erfüllt sind.

Insgesamt kann somit gemäß Ausführungsformen eine flexible Lösung zur sicheren und hochverfügbaren Datenauslagerung unter Verwendung mehrerer externer Speicherdienste bereitgestellt werden. Beliebige Nutzer, auch solche die sich nicht bei der Dateiverwaltungs-Applikation registrierte haben, können, sofern sie die entsprechenden Berechtigungen haben, auf verteilt gespeicherte Dateien zugreifen, sofern sie nur die Client-Applikation 108 installiert haben, die mit der Dateimanagement-Applikation und den Speicherdiensten über die Schnittstelle 132 kommunizieren kann um die ursprünglichen Dateien aus den Metadaten und den Dateifragmenten zu rekonstruieren.

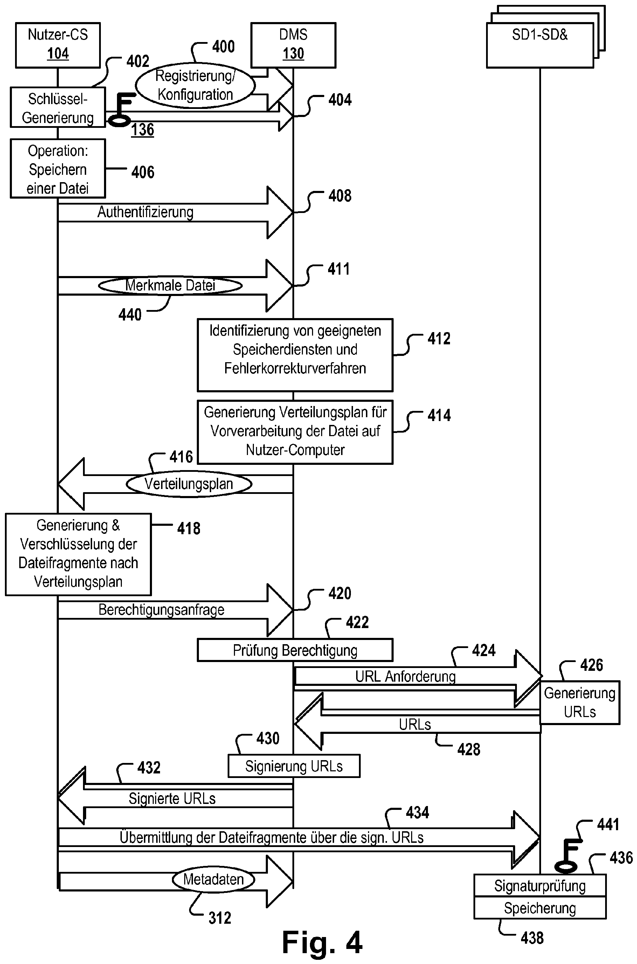

**Figur 4** zeigt den Ablauf des verteilten Speicherns einer Datei gemäß einer Ausführungsform. Zunächst, zum Beispiel im Zuge der Installation der Client Applikation 108 auf dem Nutzer-Computersystem 104 wird automatisch von der Client-Applikation ein asymmetrisches kryptographisches Schlüsselpaar beinhaltend einen privaten Entschlüsselungsschlüssel 138 und einen öffentlichen Verschlüsselungsschlüssel 136 gebildet. Der private Entschlüsselungsschlüssel wird in dem Speichermedium 106 des Nutzer-Computersystems geschützt gespeichert. Der öffentliche Verschlüsselungsschlüssel 136 wird über die Schnittstelle 132 an die Dateiverwaltungs-Applikation 304 übertragen und dort als Bestandteil eines Nutzerprofils 174 des Nutzers 102 zentral gespeichert.
Die Übertragung des öffentlichen Schlüssels 136 kann beispielsweise im Zuge einer Registrierung 400 des Nutzers bei der Dateiverwaltungs-Applikation erfolgen. Bei der Registrierung oder auch danach hat der Nutzer die Möglichkeit, sein Nutzerprofil und insbesondere seine darin enthaltenen Anforderungen 308 an die technischen und finanziellen Eigenschaften der Speicherdienste und seine Anforderungen an die Voraussetzungen 310, 316 zur Gewährung einer Zugriffsberechtigung an andere Nutzer oder Nutzergruppen auf seine Daten zu konfigurieren. Um eine bestimmte Datei zu speichern, ist eine Speicheroperation 406 zum Zugriff auf mehrere Speicherdienste erforderlich. Um dies zu ermöglichen, erfolgt jedoch keine direkte Authentifizierung bei den einzelnen Speicherdiensten. Vielmehr authentifiziert sich das Nutzer-Computersystem 104 in Schritt 408 zunächst gegenüber dem Dateimanagementserver 130. Außerdem sendet das Nutzer-Computersystem Merkmale 440 der zu speichernden Datei in Schritt 411 an den Dateimanagementserver.

Der Dateimanagementserver analysiert die in dem Nutzerprofil 174 gespeicherten Anforderungen 308 des Nutzers, analysiert einen Katalog mit Spezifikationen sämtlicher aktuell verfügbare Speicherdienste und analysiert außerdem Merkmale der Datei (z.B. die Dateigröße, den Typ der Datei etc.). Anhand der analysierten Daten identifiziert der Dateimanagementserver in Schritt 412 automatisch die Identität und Anzahl derjenigen Speicherdienste, die zur Speicherung von Dateifragmenten der zu speichernden Datei 101 verwendet werden sollen. Außerdem identifiziert der Dateimanagementserver ein Fehlerkorrekturverfahren und dessen Konfiguration, welches dazu in der Lage ist, die zu speichernde Datei so in Dateifragmente aufzuteilen, dass die Anforderungen 308 des Nutzers im Hinblick auf die Kosten, die Sicherheit, die geographische Lage der einzelnen zur Speicherung verwendeten Speicherdienste und/oder der Datenübertragungsgeschwindigkeit über das Netzwerk erfüllt werden.
Außerdem muss das Fehlerkorrekturverfahren die Datei auch so auf Dateifragmente verteilen, dass die Anforderungen des Nutzers im Hinblick auf die Verfügbarkeit der Datei gewährleistet sind. Generell gilt, dass je höher der Anteil der Fehlerkorrekturbits pro Dateifragment, desto größer die über das Netzwerk zu übertragende Datenmenge und desto größer die Redundanz der übertragenen Daten, desto höher aber auch die Verfügbarkeit der Datei trotz eines eventuellen Ausfalls einer oder mehrerer der Speicherdienste.

Der Dateimanagementserver generiert in Schritt 414 einen Verteilungsplan 416, der Identifikatoren der ermittelten Speicherdienste sowie Instruktionen zur Durchführung des ermittelten Fehlerkorrekturverfahrens (zum Beispiel Konfigurationsdaten des Fehlerkorrekturverfahrens) beinhaltet. Der Verteilungsplan wird an das Nutzer-Computersystem 104 über das Netzwerk übertragen. Alternativ dazu kann in manchen Ausführungsformen der Verteilungsplan auch durch das Nutzer-Computersystem erstellt werden. Das Nutzer-Computersystem generiert mittels des in dem Verteilungsplan spezifizierten Fehlerkorrekturverfahrens in Schritt 418 mehrere Dateifragmente F1-F4 und verschlüsselt diese. Die Dateifragmente können zum Beispiel jeweils mit einem Hashwert der ursprünglichen Datei 101, welcher als symmetrischer kryptographischer Schlüssel dient, verschlüsselt werden.

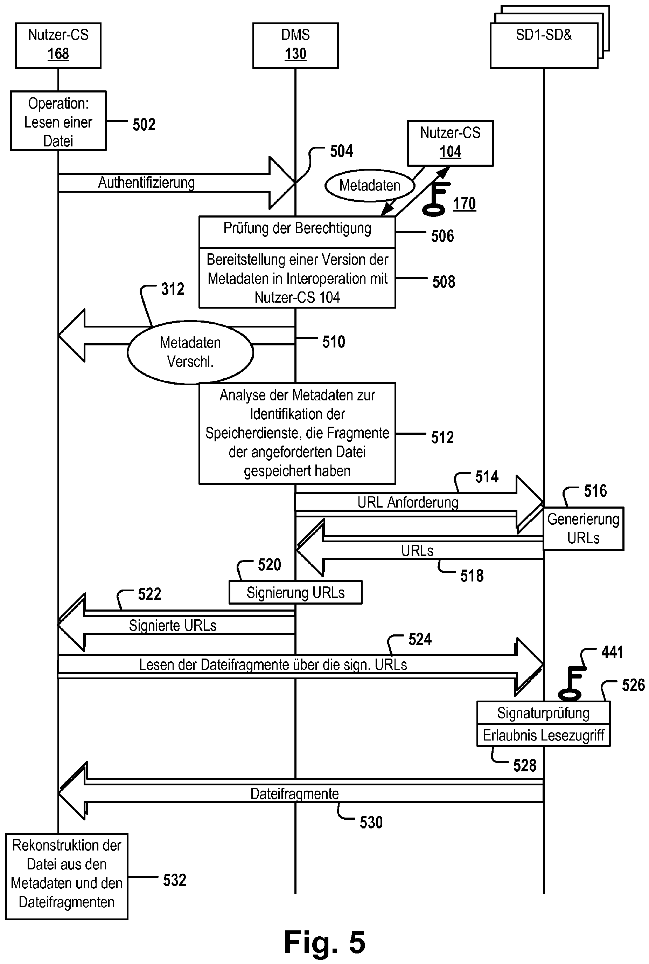

Um die generierten Dateifragmente speichern zu können, sendet das Nutzer-Computersystem eine Berechtigungsanfrage in Schritt 420 an den Dateimanagementserver, wobei diese Berechtigungsanfrage eine Anfrage beinhaltet, ob das Nutzer-Computersystem 104 berechtigt ist, auf die in dem Verteilungsplan spezifizierten Speicherdienste bzw. deren Speichermedien schreibend zuzugreifen um die Dateifragmente dort zu speichern. In Antwort auf den Erhalt der Berechtigungsanfrage prüft der Dateimanagementserver 130 in Schritt 422 ob das Nutzer-Computersystem für die angefragte Schreiboperation berechtigt ist. Falls dies der Fall ist und sich der Nutzer außerdem gegenüber dem Dateimanagementserver 130 erfolgreich authentifiziert 408 hat, fordert das Dateimanagementsystem 130 von den in dem Verteilungsplan und in der Berechtigungsanfrage spezifizierten Speicherdiensten Berechtigungstoken über das Netzwerk an. Die Berechtigungstoken können zum Beispiel als URLs 424 ausgebildet sein. In Antwort auf den Erhalt der Anforderung generieren die einzelnen Speicherdienste in Schritt 426 URLs zum Zugriff auf einen Speicherbereich von Speichermedien der jeweiligen Speicherdienste und senden die URLs an den Dateimanagementserver. Der Dateimanagementserver signiert in Schritt 430 die empfangenen URLs und leitet sie in signierter Form 432 an das Nutzer-Computersystem weiter.
Das Nutzer-Computersystem verwendet die signierten URLs um mittels dieser direkt auf die in den URLs angegebenen Speicherbereiche der Speicher der einzelnen Speicherdienste schreibend zuzugreifen und die Dateifragmente F1-4 unter Umgehung des Dateimanagementservers 130 direkt in den Speichermedien der besagten Speicherdienste SD2, SD4-SD6 über das Netzwerk zu speichern. Allerdings führen die einzelnen Speicherdienste in Schritt 436 eine Signaturprüfung der signierten URLs mittels eines Signaturprüfschlüssels, der mit dem Signierschlüssel 334 des Dateimanagementservers ein asymmetrisches kryptographisches Schlüsselpaar bildet, durch. Eine Speicherung in Schritt 438 von Dateifragmenten erfolgt jeweils nur, falls die Prüfung ergab, dass die Signatur der URL valide war.
Nach manchen Ausführungsformen werden Pfadangaben, die auf die in den Speichermedien der Speicherdienste gespeicherten Dateifragmente verweisen, der zur Verschlüsselung der Dateifragmente verwendete symmetrische kryptographische Schlüssel sowie optional noch weitere Daten von dem Nutzer-Computersystem als Metadaten 312 für die verteilt gespeicherte Datei 101 gespeichert und an den Dateimanagementserver 130 übertragen. Nach manchen Ausführungsformen enthalten die Metadaten den symmetrischen kryptographischen Schlüssel in verschlüsselter Form, wobei zur Verschlüsselung des symmetrischen Schlüssels der öffentliche Schlüssel 136 des Nutzer-Computersystems 104, durch welches die Datei gespeichert wurde, dient. Es ist auch möglich, dass in Antwort auf eine Zugriffsanfrage eines anderen Nutzer-Computersystems unter Vermittlung des Dateimanagementservers weitere Versionen der Metadaten durch das Nutzer-Computersystem generiert und unter Vermittlung des Dateimanagementservers an das anfragende Nutzer-Computersystem übertragen werden. Dies ist in Figur 5 näher erläutert.

**Figur 5** zeigt ein Ablaufdiagramm eines Lesezugriffs eines Nutzer-Computersystems 168 eines anderen Nutzers 160 auf die verteilt gespeicherte Datei 101. Eine Client-Applikation 108 oder alternativ auch die Dateiverwaltung-Applikation 304 auf dem Dateimanagementserver kann dem Nutzer 160 mittels bereits vorhandener Metadaten 312, 324 eine Sicht auf mehrere, gemäß verschiedene Verteilungspläne verteilt gespeicherte Dateien generieren und anzeigen. Der Nutzer kann, beispielsweise mittels der Nutzer-Schnittstelle 134 des Nutzer-Computersystems 168, eine visuelle Repräsentation, zum Beispiel ein Dateisymbol, der verteilt gespeicherten Datei 101 auswählen, um darauf lesend zuzugreifen. Dieser Vorgang ist als Leseoperation 502 dargestellt. Um auf die Datei 101 lesend zugreifen zu können, authentifiziert sich der Nutzer 160 in Schritt 504 zunächst gegenüber dem Dateimanagementserver 130, zum Beispiel mittels seines Personalausweises, seiner biometrischen Daten oder eines passwortbasierten Authentifizierungsverfahrens. Nach erfolgreicher Authentifizierung prüft der Dateimanagementserver, ob der weitere Nutzer 160 zum Lesezugriff auf die Datei 101 berechtigt ist. Hierzu analysiert der Dateimanagementserver die Konfiguration 175 des Eigentümers 102 der Datei 101, insbesondere dessen Angaben bezüglich eines geforderten Mindestvertrauensniveaus 310, eines geforderten Computertyps 316 und/oder bezüglich Regeln im Hinblick auf die Zugangsberechtigungen einzelner Nutzer und Nutzergruppen ("Access Control List"), die ebenfalls Bestandteil der Konfiguration 175 des Nutzers 102 sein können.

Falls die Analyse ergibt dass der Nutzer 160 zum Lesezugriff auf die Datei 101 berechtigt ist und sich erfolgreich authentifiziert hat und gegebenenfalls auch der Computertyp und das Mindestvertrauensniveau des verwendeten Authentifizierungsverfahrens 504 den von dem Nutzer 102 spezifizierten Anforderungen entsprechen, identifiziert oder generiert der Dateimanagementserver in Schritt 508 die Metadaten 312, die eine Rekonstruktion der Datei 101 aus den Dateifragmenten F1-F4 erlauben, und sendet diese in Schritt 510 an das Nutzer-Computersystem 168 des Nutzers 160. Bei den in Schritt 508 identifizierten Metadaten kann es sich um eine spezifisch für die Datei 101 und spezifisch für das weitere Nutzer-Computersystem 168 generierte Version der Metadaten handeln. Die Generation der für das um Lesezugriff anfragende Nutzer-Computersystem 168 spezifischen Metadaten kann beinhalten, dass der Dateimanagementserver, der unter anderem auch den öffentlichen Schlüssel 170 des Computersystems 168 verwaltet, nach der Feststellung, dass das Nutzer-Computersystem 168 zum Zugriff auf die Datei 101 berechtigt ist, den öffentlichen Schlüssel 170 dieses Nutzer-Computersystems 168 an das Nutzer-Computersystem 104 sendet. Das Nutzer-Computersystem 104 verwendet den öffentlichen Schlüssel 170 um den zur Verschlüsselung der Dateifragmente verwendeten symmetrischen Schlüssel zu verschlüsseln. Der verschlüsselte symmetrische Schlüssel wird mit weiteren Daten, z.B. den Pfadangaben zu den Dateifragmenten, kombiniert, um die weitere Version der Metadaten der Datei 101 bereitzustellen und an den Dateimanager zu senden. Der Dateimanagementserver leitet die weitere Version der Metadaten an das anfragende weitere Nutzer-Computersystem 168 weiter. Dieses entschlüsselt den symmetrischen kryptographischen Schlüssel der besagten Version der Metadaten mit seinem privaten Schlüssel 172. Außerdem analysiert der Dateimanagementserver in Schritt 512 die weitergeleiteten Metadaten um die Speicherdienste, in welchen die Dateifragmente F1-F4 der Datei 101 gespeichert sind, zu identifizieren.
Im nächsten Schritt sendet der Dateimanagementserver eine Anforderung 514 zum Erhalt von Berechtigungstoken zum Lesen der Dateifragmente an die in Schritt 512 identifizierten Speicherdienste. In Antwort auf den Erhalt der Anforderung generieren die identifizierten Speicherdienste in Schritt 516 Berechtigungstoken, zum Beispiel in Form von URLs, die auf die von dem jeweiligen Dienst gespeicherten Dateifragmente weisen. Die generierten Berechtigungstoken 518 werden an den Dateimanagementserver über das Netzwerk übermittelt und von diesem in Schritt 520 mit dessen Signierungsschlüssel signiert. Die signierten Berechtigungstoken 522 werden an das weitere Nutzer-Computersystem 168 übertragen und ermöglichen es diesem, einen direkten Lesezugriff 524 auf die Speichermedien der jeweiligen Speicherdienste mittels der signierten URLs durchzuführen. Der Lesezugriff wird aber von den jeweiligen Speicherdiensten nur gestattet, falls eine Signaturprüfung mittels des Signaturprüfschlüssels 441 in Schritt 526 durch die jeweiligen Speicherdienste ergibt, dass die Signatur der Berechtigungstoken valide ist. In diesem Fall geben die Speicherdienste in Schritt 528 eine Erlaubnis zum Lesen der jeweiligen, clientseitig verschlüsselt gespeicherten Dateifragmente. Die verschlüsselten Dateifragmente 530 werden über das Netzwerk direkt an das Nutzer-Computersystem 168 übertragen und dort in Schritt 532 von einer auf dem Nutzer-Computersystem 168 gespeicherten Client-Applikation 108 unter Zuhilfenahme der generierten weiteren Version der Metadaten entschlüsselt und zu der ursprünglichen Datei 101 assembliert. Der mittels des privaten Schlüssels 172 des weiteren Computersystems 168 entschlüsselte symmetrische Schlüssel erlaubt es dabei dem Nutzer-Computersystem 168, die empfangenen Metadaten zu entschlüsseln.

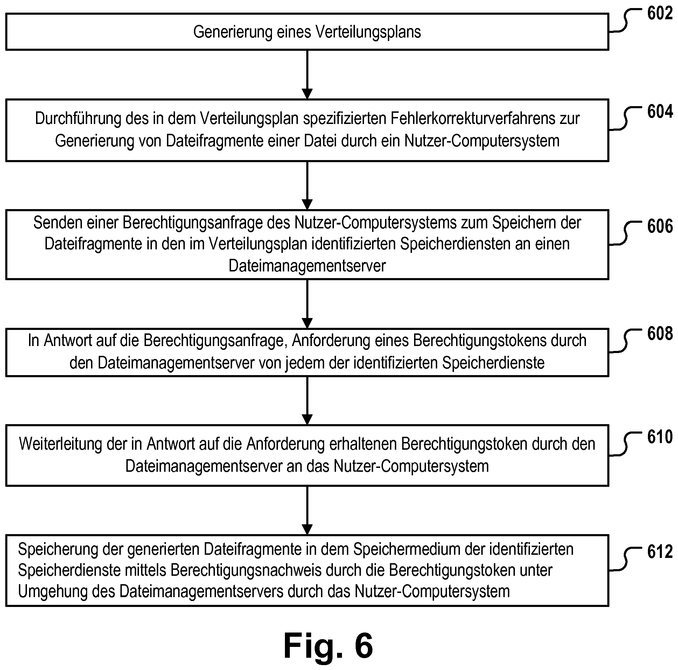

**Figur 6** zeigt ein Verfahren zur Speicherung einer Datei mittels mehrerer Speicherdienste über ein Netzwerk unter Verwendung eines Dateimanagementservers. In einem ersten Schritt 602 generiert eine Client-Applikation 108 auf einem Nutzer-Computersystem oder eine Dateiverwaltungs-Applikation 304 auf einem Dateimanagementserver 130 einen Verteilungsplan 416. In Schritt 604 führt die Client-Applikation 108 auf dem Nutzer-Computersystem 104 ein Fehlerkorrekturverfahren durch, dass in den Verteilungsplan spezifiziert ist und generiert Dateifragmente, welche gemäß dem Verteilungsplan in mehreren SD2, SD4-SD6 der Speicherdienste gespeichert werden sollen. Hierfür sendet die Client-Applikation 108 in Schritt 606 eine Berechtigungsanfrage bezüglich des Speicherns der Datei mittels der in dem Verteilungsplan 416 spezifizierten Speicherdienste an die Dateiverwaltungs-Applikation 304 des Dateimanagementservers 130. In Antwort auf den Erhalt der Berechtigungsanfrage fordert die Dateiverwaltungs-Applikation ein Berechtigungstoken von jedem der Speicherdienste, in welchem ein Dateifragment gespeichert werden soll, an. In Schritt 610 leitet die Dateiverwaltungs-Applikation die Berechtigungstoken, welche die Dateiverwaltungs-Applikation von den besagten Speicherdiensten angefordert und in Reaktion darauf erhalten hat, an die Client-Applikation 108 weiter. Nach manchen Ausführungsformen werden die Berechtigungstoken von der Dateiverwaltungs-Applikation vor der Weiterleitung signiert. Die Client-Applikation weist in Schritt 612 ihre Berechtigung zum Schreiben der Dateifragmente den einzelnen Speicherdiensten mit Hilfe der Berechtigungstoken nach und speichert nach erfolgreichem Nachweis der Berechtigung die generierten Dateifragmente in den Speichermedien der einzelnen Speicherdienste unter Umgehung des Dateimanagementservers.

### Bezugszeichenliste

- F1-114: Dateifragmente
- FKV: Fehlerkorrekturverfahren
- SD1-SD6: Speicherdienste
- SM1-SM6: Speichermedien
- 180-192: IT-Infrastruktur der Speicherdienste
- 101: Datei
- 102: Nutzer
- 104: Nutzer-Computersystem
- 106: Speichermedium
- 108: Client-Applikation
- 110: Initialisierungsmodul
- 112: (de-) Fragmentierungs-Modul
- 114: Verteilungs-/Aggregations-Modul
- 116-128: standardisierte Schnittstellen
- 130: Dateimanagementserver
- 132: Schnittstelle
- 134: Nutzer-Schnittstelle
- 135: Prozessor
- 136: öffentlicher Schlüssel
- 138: privater Schlüssel
- 160: Nutzer
- 162: Nutzer-Computersystem
- 164: öffentlicher Schlüssel
- 166: privater Schlüssel
- 168: Nutzer-Computersystem
- 170: öffentlicher Schlüssel
- 172: privater Schlüssel
- 174: Nutzerprofile
- 175: Konfiguration
- 176: Nutzerprofil
- 177: Konfiguration
- 178: Netzwerk
- 302: Speichermedium
- 304: Dateimanagement-Applikation
- 306: Verzeichnis mehrerer Nutzerprofile
- 308: Anforderungen
- 310: Mindestvertrauensniveau
- 312: Metadaten
- 314: geforderte geographische Lage
- 316: geforderter Computertyp
- 320: Anforderungen
- 322: Mindestvertrauensniveau
- 324: Metadaten
- 326: geforderte geographische Lage
- 328: geforderter Computertyp
- 329: Speicherdienst-Katalog
- 330: Modul zum Berechtigungsmanagement
- 332: Modul zur Verwaltung von Berechtigungstoken
- 334: Signierungsschlüssel
- 336: Modul zur Authentifizierung von Nutzern
- 338: Modul zur Verarbeitung von Metadaten
- 340: Modul zur Generierung von Verteilungsplänen
- 400-414: Schritte
- 416: Verteilungsplan
- 418-422: Schritte
- 424: URL-Anforderung
- 426: Schritt
- 128: Berechtigungstoken
- 430: Schritt
- 432: signierten Berechtigungstoken
- 434: übermittelte Dateifragmente
- 436-138: Schritte
- 440: Dateimerkmale
- 441: Signaturprüfschlüssel
- 502-512: Schritte
- 514: Anforderung Berechtigungstoken
- 516: Schritte
- 518: Berechtigungstoken
- 520: Schritte
- 522: signierten Berechtigungstoken
- 524: Lesezugriff
- 526-528: Schritte
- 530: übertragene Dateifragmente
- 532: Schritt
- 602-612: Schritte

## Patentansprüche

1. Verfahren zur Speicherung von Daten, wobei das Verfahren, um eine Datei (101) zu speichern, umfasst:
- automatische Generierung (602) eines Verteilungsplans (416), der Instruktionen zur Generierung von Dateifragmenten (F1-F4) der Datei mittels eines Fehlerkorrekturverfahrens (FKV) und Identifikatoren von mehreren Speicherdiensten (SD1-SD6), in deren nichtflüchtigen Speichermedien (SM1-SM6) die generierten Dateifragmente gespeichert werden sollen, enthält, durch einen Dateimanagementserver (130) oder durch ein Nutzer-Computersystem (104, 162);
- Durchführung (604) des in dem Verteilungsplan spezifizierten Fehlerkorrekturverfahrens zur Generierung der Dateifragmente aus der Datei durch das Nutzer-Computersystem, wobei zumindest eines der Dateifragmente Fehlerkorrekturbits beinhaltet;
- Senden (606) einer Berechtigungsanfrage (420) des Nutzer-Computersystems zum Speichern der Dateifragmente in den im Verteilungsplan identifizierten mehreren Speicherdiensten (SD2, SD4-SD6) an den Dateimanagementserver über ein Netzwerk (178);
- In Antwort auf den Empfang der Berechtigungsanfrage, Anforderung (608, 424) eines Berechtigungstokens durch den Dateimanagementserver von jedem der in dem Verteilungsplan identifizierten mehreren Speicherdienste und Weiterleitung (610) der in Antwort auf die Anforderung durch die identifizierten Speicherdienste generierten und von diesen erhaltenen Berechtigungstoken (428) durch den Dateimanagementserver an das Nutzer-Computersystem; und
- Speicherung (612) der generierten Dateifragmente in den Speichermedien (SM2, SM4-SM6) der identifizierten Speicherdienste über das Netzwerk mittels Berechtigungsnachweis durch die Berechtigungstoken unter Umgehung des Dateimanagementservers durch das Nutzer-Computersystem, so dass der Dateimanagementserver keinen Zugriff auf den Inhalt der übertragenen Dateifragmente hat;
wobei Metadaten (312), die die Rekonstruktion der Datei (101) aus den gespeicherten Dateifragmenten erlauben, in dem Nutzer-Computersystem und/oder dem Dateimanagementserver gespeichert werden und gegen einen Zugriff der Speicherdienste gesichert sind.

2. Verfahren nach Anspruch 1, umfassend:
- Bereitstellung einer Konfiguration (175), die Anforderungen (308) eines Nutzers (102) hinsichtlich der Geschwindigkeit, der geographischen Lage, der Sicherheit und/oder der Kosten einer für die Speicherung von Daten zu nutzenden IT-Infrastruktur sowie Anforderungen hinsichtlich der Verfügbarkeit der zu speichernden Daten enthält;
- Bereitstellung eines Speicherdienst-Katalogs (329), der Spezifikationen einer Vielzahl von zur Verfügung stehenden Speicherdiensten (SD1-SD6) umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur (180-192) des Speicherdienstes enthalten;
- um den Verteilungsplan (416) zu generieren, automatische Auswertung der Konfiguration und des Speicherdienst-Katalogs, um in Abhängigkeit von den Spezifikationen der verfügbaren Speicherdienste und in Abhängigkeit der Anforderungen (308) des Nutzers ein Fehlerkorrekturverfahren aus einer Vielzahl von Fehlerkorrekturverfahren zu identifizieren, das den Anforderungen hinsichtlich der Verfügbarkeit der zu speichernden Daten genügt und um die im Verteilungsplan identifizierten mehreren Speicherdienste aus der Vielzahl der zur Verfügung stehenden Speicherdienste zu identifizieren, die zur Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind;
- Verwenden des identifizierten Fehlerkorrekturverfahrens als das Fehlerkorrekturverfahren des Verteilungsplans.

3. Verfahren nach einem der vorigen Ansprüche, ferner umfassend:
- Generierung der Metadaten (312), durch das Nutzer-Computersystem (104), wobei das Nutzer-Computersystem einem Nutzer (102) zugeordnet ist, wobei die Metadaten beinhalten:
• Pfade (432) zu allen Speicherorten in den Speichermedien der Speicherdienste, in welchen die Dateifragmente der Datei gespeichert werden sollen oder bereits gespeichert wurden; und/oder
• einen symmetrischen Schlüssel, der eine Entschlüsselung des mit diesem symmetrischen Schlüssel verschlüsselten Dateifragments erlaubt; und/oder
• für jedes der Dateifragmente einen von dem Nutzer-Computersystem berechneten Hash-Wert des Dateifragments; und/oder
• den ursprünglichen Dateinamen der verteilt gespeicherten Datei (101); und/oder
• Konfigurationsdaten des Fehlerkorrekturverfahrens (FKV);
• ein Mapping des ursprünglichen Dateinamens zu den Hashwerten und Pfaden der generierten Dateifragmente;
- Speicherung der Metadaten in dem Nutzer-Computersystem;
- Übertragung der Metadaten an den Dateimanagementserver; und
- Verwendung der Metadaten durch den Dateimanagementserver zur Kontrolle des Zugriffs eines weiteren Nutzers (160) auf die Datei.

4. Verfahren nach Anspruch 3,
- wobei in dem Nutzer-Computersystem Metadaten einer Vielzahl von verteilt in den Speicherdiensten gespeicherten Dateien gespeichert sind und das Verfahren eine Verwendung der besagten Metadaten durch eine Client-Applikation (108) des Nutzer-Computers zur Generierung einer clientbasierten Sicht auf die verteilt gespeicherten Dateien umfasst; und/oder
- wobei in dem Dateimanagementserver Metadaten einer Vielzahl von verteilt in den Speicherdiensten gespeicherten Dateien gespeichert ist und das Verfahren eine Verwendung der besagten Metadaten durch ein auf dem Dateimanagementserver gehostetes Webportal (304) zur Generierung einer netzwerkbasierten Sicht auf die verteilt gespeicherten Dateien umfasst;
wobei die clientbasierte und/oder die netzwerkbasierte Sicht dazu konfiguriert ist die ursprünglichen Dateinamen aus den Metadaten dynamisch zu rekonstruieren und durch Auswahl einer der verteilt gespeicherten Dateien eine dynamische und automatische Rekonstruktion des Dateiinhalts der ausgewählten Datei durch das Nutzer-Computersystem oder durch ein weiteres berechtigtes Nutzer-Computersystem zu initiieren, wobei die Speicherdienste, in welchen Fragmente der ausgewählten Datei gespeichert sind, durch die Sicht verborgen werden.

5. Verfahren nach einem der Ansprüche 2-4,
- wobei die Ermittlung des Fehlerkorrekturverfahrens, welches den Anforderungen des Nutzers hinsichtlich der Verfügbarkeit der Datei genügt, eine Ermittlung der zu erwartenden Gesamtgröße aller durch das Fehlerkorrekturverfahren zu generierenden Dateifragmente (F1-F4) beinhaltet, wobei für jedes der zu generierenden Dateifragmente ein Speicherdienst identifiziert wird, welcher gemäß dessen Angaben den Anforderungen hinsichtlich der Geschwindigkeit, geographischen Lage, Sicherheit und/oder Kosten unter Berücksichtigung der zu erwartenden Gesamtgröße genügt; und/oder
- wobei falls das ermittelte Fehlerkorrekturverfahren die Generierung von Dateifragmenten bewirken würde, deren Gesamtgröße es nicht erlaubt, eine hinreichende Anzahl von Speicherdiensten zu identifizieren, die gemäß deren Angaben den Anforderungen hinsichtlich der Geschwindigkeit, Sicherheit und/oder Kosten unter Berücksichtigung der Gesamtgröße genügen, automatisch eine Ermittlung eines anderen Fehlerkorrekturverfahrens erfolgt, welches dazu konfiguriert ist, Dateifragmente zu erzeugen, deren zu erwartende Gesamtgröße hinreichend klein ist, sodass für jedes zu generierende Dateifragment ein Speicherdienst identifiziert werden kann welcher gemäß seiner Angaben den Anforderungen hinsichtlich der Geschwindigkeit, geographischen Lage, Sicherheit und/oder Kosten unter Berücksichtigung der zu erwartenden Gesamtgröße genügt; und/oder
- wobei, um Anforderungen des Nutzers im Hinblick auf eine maximale Dauer des Datentransfers zur Übertragung der Datei über das Netzwerk zu erfüllen, das ermittelte Fehlerkorrekturverfahren automatisch so konfiguriert wird, dass durch dieses eine hinreichend große Anzahl der generierten Dateifragmente generiert wird, sodass bei paralleler Übertragung dieser Dateifragmente zu den oder von den mehreren in dem Verteilungsplan identifizierten Speicherdiensten die Übertragungszeit für alle Dateifragmente unterhalb der maximalen Dauer liegt.

6. Verfahren nach einem der vorigen Ansprüche, ferner umfassend:
- Berechnung eines Hashwerts der gesamten Datei durch das Nutzer-Computersystem;
- Verschlüsselung jedes der Dateifragmente (F1-F4) der Datei (101) durch das Nutzer-Computersystem, wobei der Hashwert als symmetrischer Schlüssel zur Verschlüsselung der Dateifragmente durch das Nutzer-Computersystem verwendet wird;
- Generierung der Metadaten, wobei die Metadaten den berechneten Hashwert der gesamten Datei und Hashwerte der Dateifragmente beinhalten, durch das Nutzer-Computersystem;
- Verschlüsselung der generierten Metadaten, die den symmetrischen Schlüssel beinhalten, oder zumindest des symmetrischen Schlüssels, durch einen öffentlichen Schlüssel (136, 170), der dem Nutzer-Computersystem (104) eines Nutzers (102) oder einem weiteren, zum Zugriff auf die Datei berechtigten Nutzer-Computersystems (168) eines weiteren Nutzers (160) zugeordnet ist, wobei ein privater Schlüssel (138, 172) mit dem öffentlichen Schlüssel (136, 170) ein asymmetrisches kryptographisches Schlüsselpaar bildet, wobei der öffentliche Schlüssel (136, 170) in dem Dateimanagementserver mit einem Nutzerprofil (176, 178) des Nutzers, dem der öffentliche Schlüssel zugeordnet ist, verknüpft gespeichert ist; und
wobei die Dateifragmente in verschlüsselter Form in den Speichermedien der identifizierten Speicherdienste gespeichert werden.

7. Verfahren nach einem der vorigen Ansprüche, wobei der Dateimanagementserver einen öffentlichen Schlüssel (170) eines weiteren Nutzer-Computersystems (168) eines weiteren Nutzers (160) verwaltet, ferner umfassend:
- Authentifizierung (504) des weiteren Nutzers (160) gegenüber dem Dateimanagementserver (130);
- Nach erfolgreicher Authentifizierung, Prüfung, durch den Dateimanagementserver, ob der weitere Nutzer (160) zum Lesezugriff auf die Datei (101) berechtigt ist;
- Falls die Analyse ergibt dass der weitere Nutzer (160) zum Lesezugriff auf die Datei berechtigt ist und sich erfolgreich authentifiziert hat, Generierung (508) einer weiteren Version der Metadaten (312), wobei die weitere Version der Metadaten (312) eine Rekonstruktion der Datei (101) aus den Dateifragmenten (F1-F4) erlaubt, wobei die weitere Version der Metadaten spezifisch für die Datei (101) und spezifisch für das weitere Nutzer-Computersystem (168) generiert wird, wobei die Generierung der weiteren Version der Metadaten der Datei (101) beinhaltet:
• Senden, durch den Dateimanagementserver, des öffentlichen Schlüssels (170) des weiteren Nutzer-Computersystems (168) an das Nutzer-Computersystem (104), welches die Datei generiert und dessen Fragmente mit seinem symmetrischen Schlüssel verschlüsselt hat;
• Verschlüsselung des symmetrischen Schlüssel mit dem öffentlichen Schlüssel (170) des weiteren Nutzer-Computersystems (168) durch das Nutzer-Computersystem (104), das die Datei generiert hat;
• Kombination des verschlüsselten symmetrischen Schlüssels mit weiteren Daten durch das Nutzer-Computersystem (104), das die Datei generiert hat, um die weitere Version der Metadaten zu erstellen;
• Senden der weiteren Version der Metadaten an den Dateimanagementserver;
• Weiterleitung der weiteren Version der Metadaten durch den Dateimanagementserver an das weitere Nutzer-Computersystem (168) um dem weiteren Nutzer-Computersystem eine Entschlüsselung des symmetrischen Schlüssels mit seinem privaten Schlüssel (172), der mit dem öffentlichen Schlüssel (170) ein asymmetrisches kryptographisches Schlüsselpaar bildet, zu ermöglichen.

8. Verfahren nach einem der vorigen Ansprüche, ferner umfassend:
- Authentifizierung des Nutzer-Computersystems gegenüber dem Dateimanagementserver;
- Auf Empfang der Berechtigungsanfrage des Nutzer-Computersystems(104) zur Speicherung der Dateifragmente, Prüfung durch den Dateimanagementserver ob der Nutzer dem das Nutzer-Computersystem zugeordnet ist, Zugriffsrechte zum Speichern der Datei mittels der identifizierten Speicherdienste besitzt;
wobei die Anforderung des Berechtigungstokens durch den Dateimanagementserver nur nach erfolgreicher Authentifizierung und nur falls der Nutzer die Zugriffsrechte besitzt, erfolgt.

9. Verfahren nach einem der vorigen Ansprüche, wobei ein Signierschlüssel (334) von dem Dateimanagementserver in geschützt gespeicherter Form verwaltet wird, ferner umfassend:
- Bereitstellung eines Signaturprüfschlüssels an jeden der Speicherdienste, wobei der Signaturprüfschlüssel zur Prüfung der von dem Signierschlüssel generierten Signaturen ausgebildet ist;
- Signierung der von jedem der identifizierten Speicherdienste empfangenen Berechtigungstoken mit dem Signierschlüssel durch den Dateimanagementserver, wobei die Berechtigungstoken in signierter Form an das Nutzer-Computersystem weitergeleitet werden,
wobei jedes der signierten Berechtigungstoken (432) einem Empfänger (104) dieses signierten Berechtigungstokens einen Zugriff auf einen durch das Berechtigungstoken identifizierten Speicherplatz auf dem Speichermedium des jeweiligen Speicherdienstes nur ermöglicht, wenn der jeweilige Speicherdienst die Signatur als valide erkennt.

10. Verfahren nach einem der vorigen Ansprüche, ferner umfassend:
- Empfang einer Zugriffs-Anfrage eines weiteren Nutzer-Computersystems (168) zum Zugriff auf die verteilt gespeicherte Datei, wobei die Zugriffs-Anfrage durch den Dateimanagementserver empfangen wird;
- Identifikation der Speicherdienste (SD2, SD4-SD6), die Dateifragmente (F1-F4) der Datei gespeichert haben anhand der Metadaten (312) der Datei durch den Dateimanagementserver;
- Prüfung durch den Dateimanagementserver ob ein weiterer Nutzer (160), dem das weitere Nutzer-Computersystem zugeordnet ist, Zugriffsrechte für den Typ des angeforderten Zugriffs auf die Datei besitzt;
- Authentifizierung (504) des weiteren Nutzer-Computersystems gegenüber dem Dateimanagementserver;
- Nach erfolgreicher Authentifizierung und falls der weitere Nutzer (160) die Zugriffsrechte für die Datei besitzt, Anforderung (514) eines weiteren Berechtigungstokens durch den Dateimanagementserver von jedem der identifizierten Speicherdienste und Weiterleitung (522) der in Antwort auf diese Anforderung erhaltenen weiteren Berechtigungstoken durch den Dateimanagementserver an das weitere Nutzer-Computersystem, wobei die weiteren Berechtigungstoken dem weiteren Nutzer-Computersystem den angeforderten Zugriff auf die durch die Speicherdienste jeweils gespeicherten Dateifragmente in direkter Form ermöglichen.

11. Verfahren nach Anspruch 10,
- wobei die Konfiguration (175) des Nutzers (102) eine Angabe (316) eines Typs von Computern enthält, welcher allein berechtigt ist, auf Daten, die der Nutzer in den Speichermedien der identifizierten Dienste gespeichert hat, zuzugreifen; und
- wobei die Anforderung des weiteren Berechtigungstokens nur dann von dem Dateimanagementserver an die identifizierten Speicherdienste gesendet wird, falls das weitere Nutzer-Computersystem (168), von welchem der weitere Nutzer (160) die Zugriffs-Anfrage an den Dateimanagementserver versendet hat, die Angabe (316) des allein berechtigten Computertyps erfüllt.

12. Verfahren nach einem der Ansprüche 10-11, ferner mit:
- Verwaltung eines Nutzerprofils (176) des weiteren Nutzers (160) durch den Dateimanagementserver, wobei das Nutzerprofil einen öffentlichen Schlüssel (170) enthält, der zusammen mit einem privaten Entschlüsselungsschlüssel (172) ein asymmetrisches kryptographisches Schlüsselpaar bildet, wobei der eine private Entschlüsselungsschlüssel in dem weiteren Nutzer-Computersystem (168) geschützt gespeichert ist und zur Entschlüsselung der Metadaten der Datei oder zur Entschlüsselung von Teilen der Metadaten dient; und
- falls sich der weitere Nutzer erfolgreich gegenüber dem Dateimanagementserver authentifiziert hat und falls der weitere Nutzer die Zugriffsrechte für die Datei besitzt, Senden des öffentlichen Schlüssels (170) durch den Dateimanagementserver an das Nutzer-Computersystem (104) zur Verschlüsselung der Metadaten oder von Teilen der Metadaten durch das Nutzer-Computersystem (104) und Empfang und Weiterleitung der ganz oder teilweise mit dem gesendeten öffentlichen Schlüssel (170) verschlüsselten Metadaten der Datei durch den Dateimanagementserver an das weitere Nutzer-Computersystem (168) um dem weiteren Nutzer-Computersystem eine Entschlüsselung der weitergeleiteten Metadaten mit dem privaten Entschlüsselungsschlüssel (172) und eine Rekonstruktion der Datei aus den Dateifragmenten zu ermöglichen.

13. Computerlesbares Speichermedium (106, 302) mit computerlesbaren Instruktionen welche bei Ausführung durch einen Prozessor (342) den Prozessor zur Durchführung des Verfahrens nach einem der vorigen Ansprüche veranlassen.

14. Ein Nutzer-Computersystem (104, 162, 168) umfassend einen Prozessor (135), eine Netzwerkschnittstelle (132.2) zur operativen Kopplung des Nutzer-Computersystems an eine Vielzahl von Speicherdiensten (SD1-SD6) und an einen Dateimanagementserver (130) über ein Netzwerk (178), wobei das Nutzer-Computersystem ein Speichermedium (106) mit einer von dem Prozessor ausführbaren Client-Applikation (108) umfasst, wobei die Client-Applikation zur Ausführung folgenden Verfahrens zur Speicherung einer Datei konfiguriert ist:
- Verwenden eines Verteilungsplans (416), der Instruktionen zur Generierung von Dateifragmenten (F1-F4) der Datei (101) mittels eines Fehlerkorrekturverfahrens (FKV) und Identifikatoren von mehreren Speicherdiensten (SD2, SD2-SD6), in deren nichtflüchtigen Speichermedien die generierten Dateifragmente gespeichert werden sollen, enthält, wobei der Dateimanagementserver keinen Speicherdienst bereitstellt;
- Durchführung (604) des in dem Verteilungsplan spezifizierten Fehlerkorrekturverfahrens zur Generierung der Dateifragmente der Datei, wobei zumindest eines der Dateifragmente Fehlerkorrekturbits beinhaltet;
- Senden (606) einer Berechtigungsanfrage des Nutzer-Computersystems zum Speichern der Dateifragmente in den im Verteilungsplan identifizierten Speicherdiensten an den Dateimanagementserver über das Netzwerk (178);
- In Antwort auf das Senden der Berechtigungsanfrage, Empfang von durch die identifizierten Speicherdienste generierten Berechtigungstoken von den identifizierten Speicherdiensten am Dateimanagementserver für jeden der in dem Verteilungsplan identifizierten Speicherdienste; und
- Speicherung (612) der generierten Dateifragmente in den Speichermedien der identifizierten Speicherdienste über das Netzwerk mittels Berechtigungsnachweis durch die Berechtigungstoken unter Umgehung des Dateimanagementservers durch das Nutzer-Computersystem, so dass der Dateimanagementserver keinen Zugriff auf den Inhalt der übertragenen Dateifragmente hat, wobei Metadaten (312), die die Rekonstruktion der Datei aus den gespeicherten Dateifragmenten erlauben, gegen einen Zugriff der Speicherdienste gesichert sind.

15. Ein Dateimanagementserver (130) umfassend einen Prozessor (342), eine Netzwerkschnittstelle (132.1) zur operativen Kopplung des Dateimanagementservers mit zumindest einem Nutzer-Computersystem (104, 162, 168) und mit einer Vielzahl von Speicherdiensten (SD1-SD6) über ein Netzwerk (178), wobei der Dateimanagementserver ein Speichermedium (302) mit einer von dem Prozessor ausführbaren Dateimanagement-Applikation (304) umfasst, wobei die Dateimanagement-Applikation zur Ausführung folgenden Verfahrens zur Speicherung einer Datei (101) konfiguriert ist:
- Empfang einer Berechtigungsanfrage (420) des Nutzer-Computersystems zum Speichern von Dateifragmenten (F1-F4) der Datei (101) über das Netzwerk in mehreren (SD2, SD4-SD6) der Speicherdienste, wobei der Dateimanagementserver keinen Speicherdienst bereitstellt, so dass der Dateimanagementserver keinen Zugriff auf den Inhalt der übertragenen Dateifragmente hat; und
- In Antwort auf den Empfang der Berechtigungsanfrage, Anforderung (608) eines Berechtigungstokens von jedem der mehreren Speicherdienste und Weiterleitung (610) der in Antwort auf die Anforderung (608) durch die in einem Verteilungsplan identifizierten Speicherdienste generierten und von diesen erhaltenen Berechtigungstoken an das Nutzer-Computersystem, wobei Metadaten (312), die die Rekonstruktion der Datei aus den gespeicherten Dateifragmenten erlauben, gegen einen Zugriff der Speicherdienste gesichert sind.

## Claims

1. A method for storing data, wherein the method comprises the following steps in order to store a file (101):
- automatically generating (602) a distribution schedule (416), which contains instructions for generating file fragments (F1-F4) of the file by means of an error correction method (FKV) and identifiers of a number of memory services (SD1-SD6), in the non-volatile storage media (SM1-SM6) of which the generated file fragments are to be stored, by a file management server (130) or by a user computer system (104, 162);
- performing (604) the error correction method specified in the distribution schedule for generation of the file fragments from the file by the user computer system, wherein at least one of the file fragments contains error correction bits;
- sending (606) an authorisation enquiry (420) of the user computer system for storing the file fragments in the memory services (SD2, SD4-SD6) identified in the distribution schedule to the file management server via a network (178);
- in response to receipt of the authorisation enquiry, requesting (608, 424) an authorisation token by the file management server from each of the memory services identified in the distribution schedule and forwarding (610) the authorisation tokens (428) generated by the identified memory services and obtained therefrom by the file management server to the user computer system; and
- storing (612) the generated file fragments via the network in the storage media (SM2, SM4-SM6) of the identified memory devices by means of authorisation verification by the authorisation tokens, with the user computer system bypassing the file management server, such that the file management server does not have access to the content of the transmitted file fragments;
wherein metadata (312), which allow the reconstruction of the file (101) from the stored file fragments, are stored in the user computer system and/or the file management server and are protected against access by the memory services.

2. The method according to claim 1, comprising the following steps:
- providing a configuration (175), which contains requirements (308) of a user (102) with regard to the speed, the geographical location, the security and/or the costs of an IT infrastructure to be used for the storing of data and also requirements with regard to the availability of the data to be stored;
- providing a memory service catalogue (329), which comprises specifications of a multiplicity of available memory services (SD1-SD6), wherein the specification of each of the memory services contains details with regard to the speed, the geographical location, the security and/or the costs of an IT infrastructure (180-192) of the memory service used for the storing of the data;
- in order to generate the distribution schedule (416), automatically evaluating the configuration and the memory service catalogue so as to identify, depending on the specifications of the available memory services and depending on the user requirements (308), an error correction method from a multiplicity of error correction methods that meets the requirements with regard to the availability of the data to be stored and so as to identify the plurality of memory services identified in the distribution schedule from the multiplicity of available memory services that are suitable for storing the file in accordance with the user-specific requirements with regard to the speed, geographical location, security and/or costs of the IT infrastructure to be used for the storing of data; and;
- using the identified error correction method as the error correction method of the distribution schedule.

3. The method according to either one of the preceding claims, further comprising the following steps:
- generating the metadata (312) by the user computer system (104), wherein the user computer system is assigned to a user (102), wherein the metadata include:
• paths (432) to all memory locations in the storage media of the memory services in which the file fragments of the file are to be stored or have already been stored; and/or
• a symmetric key, which allows a decryption of the file fragment encrypted with this symmetric key; and/or
• for each of the file fragments, a hash value of the file fragment calculated by the user computer system; and/or
• the original file name of the file (101) stored in a distributed manner; and/or
• configuration data of the error correction method (FKV);
• a mapping of the original file name to the hash values and paths of the generated file fragments;
- storing the metadata in the user computer system;
- transferring the metadata to the file management server; and
- using the metadata by the file management server to control the access of a further user (160) to the file.

4. The method according to claim 3,
- wherein metadata of a multiplicity of files stored in a distributed manner in the memory services are stored in the user computer system and the method comprises a use of said metadata by a client application (108) of the user computer for generation of a client-based view of the files stored in a distributed manner; and/or
- wherein metadata of a multiplicity of files stored in the memory services in a distributed manner are stored in the file management server and the method comprises a use of said metadata by a web portal (304) hosted on the file management server for generation of a network-based view of the files stored in a distributed manner;
wherein the client-based and/or the network-based view is configured to dynamically reconstruct the original file names from the metadata and, by selection of one of the files stored in a distributed manner, to initiate a dynamic and automatic reconstruction of the file content of the selected file by the user computer system or by a further authorised user computer system, wherein the memory services in which fragments of the selected file are stored are hidden by the view.

5. The method according to any one of claims 2-4,
- wherein the determination of the error correction method which meets the user requirements with regard to the availability of the file includes a determination of the anticipated total size of all file fragments (F1-F4) to be generated by the error correction method, wherein for each of the file fragments to be generated, a memory service is identified which, in accordance with its specifications, meets the requirements with regard to the speed, geographical location, security and/or costs under consideration of the anticipated total size; and/or
- wherein, if the determined error correction method would prompt the generation of file fragments of which the total size does not make it possible to identify a sufficient number of memory services which, in accordance with their specifications, meet the requirements with regard to the speed, security and/or costs under consideration of the total size, automatically determining another error correction method, which is configured to generate file fragments of which the anticipated total size is sufficiently small so that, for each file fragment to be generated, a memory service can be identified which, in accordance with its specifications, meets the requirements with regard to the speed, geographical location, security and/or costs under consideration of the anticipated total size; and/or
- wherein, in order to meet the user requirements with regard to a maximum duration of the data transfer for the transfer of the file via the network, the determined error correction method is automatically configured so that, as a result of this method, a sufficiently large number of the generated file fragments is generated, such that with parallel transfer of these file fragments to the, or from the plurality of memory services identified in the distribution schedule the transfer time for all file fragments lies below the maximum duration.

6. The method according to any one of the preceding claims, also comprising the steps of:
- calculating a hash value of the entire file by the user computer system;
- encrypting each of the file fragments (F1-F4) of the file (101) by the user computer system, wherein the hash value is used as a symmetric key for encryption of the file fragments by the user computer system;
- generating the metadata, wherein the metadata include the calculated hash value of the total file and hash values of the file fragments, by the user computer system;
- encrypting the generated metadata, which include the symmetric key, or at least the symmetric key, by a public key (136, 170), which is assigned to the user computer system (104) of a user (102) or a further user computer system (168) of a further user (160) authorised to access the file, wherein a private key (138, 172) together with the public key (136, 170) forms an asymmetric cryptographic key pair, wherein the public key (136, 170) in the file management server is linked to a user profile (176, 178) of the user assigned to the public key; and
wherein the file fragments are stored in encrypted form in the storage media of the identified memory services.

7. The method according to any one of the preceding claims, wherein the file management server manages a public key (170) of a further user computer system (168) of a further user (160), further comprising the steps of:
- authenticating (504) the further user (160) to the file management server (130);
- after successful authentication, checking, by the file management server, whether the further user (160) is authorised for read access to the file (101);
- if the analysis reveals that the further user (160) is authorised for read access to the file and has successfully authenticated himself, generating (508) a further version of the metadata (312), wherein the further version of the metadata (312) allows a reconstruction of the file (101) from the file fragments (F1-F4), wherein the further version of the metadata is generated specifically for the file (101) and specifically for the further user computer system (168), wherein the generation of the further version of the metadata of the file (101) includes:
• sending, by the file management server, the public key (170) of the further user computer system (168) to the user computer system (104) which generated the file and encrypted fragments thereof using its symmetric key;
• encrypting the symmetric key using the public key (170) of the further user computer system (168) by the user computer system (104) which generated the file;
• combining the encrypted symmetric key with further data by the user computer system (104) which generated the file, in order to create the further version of the metadata;
• sending the further version of the metadata to the file management server;
• forwarding the further version of the metadata by the file management server to the further user computer system (168) in order to enable the further user computer system to decrypt the symmetric key using its private key (172), which together with the public key (170) forms an asymmetric cryptographic key pair.

8. The method according to any one of the preceding claims, also comprising the steps of:
- authenticating the user computer system to the file management server;
- upon receipt of the authorisation enquiry of the user computer system (104) for storage of the file fragments, checking, by the file management server, whether the user to whom the user computer system is assigned has access rights in order to store the file by means of the identified memory services;
wherein the file management server requests the authorisation token only following successful authentication and only if the user has the access rights.

9. The method according to any one of the preceding claims, wherein a signing key (334) is managed by the file management server in a form stored in a protected manner, said method also comprising the steps of:
- providing a signature validation key to each of the memory services, wherein the signature validation key is designed to validate the signatures generated by the signing key;
- signing of the authorisation tokens received from each of the identified memory services with the signing key by the file management server, wherein the authorisation tokens are forwarded in signed form to the user computer system,
wherein each of the signed authorisation tokens (432) enables a receiver (104) of this signed authorisation token to access a storage space on the storage medium of the corresponding memory service identified by the authorisation token only when the memory service in question identifies the signature as being valid.

10. The method according to any one of the preceding claims, also comprising the steps of:
- receiving an access enquiry of a further user computer system (168) for access to the file stored in a distributed manner, wherein the access enquiry is received by the file management server;
- identifying the memory services (SD2, SD4-SD6) that have stored file fragments (F1-F4) of the file on the basis of the metadata (312) of the file by the file management server;
- checking, by the file management server, whether a further user (160), to whom the further user computer system is assigned, has access rights for the type of requested access to the file;
- authenticating (504) the further user computer system to the file management server;
- following successful authentication and if the further user (160) has access rights for the file, requesting (514) a further authorisation token by the file management server from each of the identified memory services and forwarding (522) the further authorisation tokens obtained in response to this request to the further user computer system by the file management server, wherein the further authorisation tokens allow the further user computer system to have the requested access to the file fragments stored by the memory services in direct form.

11. The method according to claim 10,
- wherein the configuration (175) of the user (102) contains a specification (316) of a type of computer which is alone authorised to access data that the user has stored in the storage media of the identified services; and
- wherein the request of the further authorisation token is only sent from the file management server to the identified memory services if the further user computer system (168), from which the further user (160) has sent the access enquiry to the file management server, meets said specification (316) of the sole authorised computer type.

12. The method according to any one of claims 10-11, further comprising the steps of:
- managing a user profile (176) of the further user (160) by the file management server, wherein the user profile contains a public key (170), which together with a private decryption key (172) forms an asymmetric cryptographic key pair, wherein the private decryption key is stored in a protected manner in the further user computer system (168) and serves to decrypt the metadata of the file or to decrypt parts of the metadata; and
- if the user has authenticated himself successfully to the file management server and if the further user has the access rights for the file, sending the public key (170) by the file management server to the user computer system (104) for encryption of the metadata or of parts of the metadata by the user computer system (104) and receiving and forwarding the metadata of the file wholly or partially encrypted using the sent public key (170) by the file management server to the further user computer system (168) so as to enable the further user computer system to decrypt the forwarded metadata using the private decryption key (172) and to reconstruct the file from the file fragments

13. A computer-readable storage medium (106, 302) with computer-readable instructions which, with execution by a processor (342), prompt the processor to perform the method according to one of the preceding claims.

14. A user computer system (104, 162, 168) comprising a processor (135), a network interface (132.2) for operatively coupling the user computer system to a multiplicity of memory services (SD1-SD6) and to a file management server (130) via a network (178), wherein the user computer system comprises a memory medium (106) with a client application (108) that can be executed by the processor, wherein the client application is configured to execute the following method for storing a file:
- using a distribution schedule (416), which contains instructions for generating file fragments (F1-F4) of the file (101) by means of an error correction method (FKV) and identifiers of a number of memory services (SD2, SD2-SD6) in the non-volatile storage media of which the generated file fragments are to be stored, wherein the file management server does not provide a memory service;
- performing (604) the error correction method specified in the distribution schedule for generating the file fragments of the file, wherein at least one of the file fragments includes error correction bits;
- sending (606) an authorisation enquiry of the user computer system for storing the file fragments in the memory services identified in the distribution schedule to the file management server via the network (178);
- in response to the sending of the authorisation enquiry, receiving authorisation tokens generated by the identified memory services from the identified memory services at the file management server for each of the memory services identified in the distribution schedule; and
- storing (612) the generated file fragments via the network in the storage media of the identified memory services by means of authorisation verification by the authorisation tokens, with the user computer system bypassing the file management server, such that the file management server does not have access to the content of the transmitted file fragments, wherein metadata (312), which allow the reconstruction of the file from the stored file fragments, are protected against access by the memory services.

15. A file management server (130) comprising a processor (342), a network interface (132.1) for operatively coupling the file management server to at least one user computer system (104, 162, 168) and to a multiplicity of memory services (SD1-SD6) via a network (178), wherein the file management server comprises a storage medium (302) with a file management application (304) which can be executed by the processor, wherein the file management application is configured to execute the following method for storing a file (101):
- receiving an authorisation enquiry (420) of the user computer system to store file fragments (F1-F4) of the file (101) via the network in a plurality (SD2, SD4-SD6) of the memory services, wherein the file management server does not provide a memory service, and therefore the file management server does not have access to the content of the transmitted file fragments; and
- in response to the receipt of the authorisation enquiry, requesting (608) an authorisation token from each of the plurality of memory services and forwarding (610) the authorisation tokens generated by the memory services identified in a distribution schedule and obtained therefrom in response to the request (608) to the user computer system, wherein metadata (312), which allow the reconstruction of the file from the stored file fragments, are protected against access by the memory services.

## Revendications

1. Procédé de stockage de données, où le procédé, afin de stocker une donnée (101), comprend :
- la génération automatique (602) d'un plan de distribution (416) qui contient des instructions pour la génération de fragments de donnée (F1 à F4) de la donnée au moyen d'un procédé de correction d'erreurs (FKV) et d'identificateurs de plusieurs services de stockage (SD1 à SD6), dans les supports de stockage (SM1 à SM6) non volatils desquels les fragments de donnée générés doivent être stockés, par un serveur de gestion de données (130) ou par un système informatique d'utilisateur (104 ; 162) ;
- l'exécution (604) du procédé de correction d'erreurs précisé dans le plan de distribution pour la génération des fragments de donnée à partir de la donnée par le système informatique d'utilisateur, où au moins un des fragments de donnée contient des bits de correction d'erreurs ;
- l'envoi (606) d'une demande d'autorisation (420) du système informatique d'utilisateur pour le stockage des fragments de donnée dans les nombreux services de stockage (SD2, SD4 à SD6) identifiés dans le plan de distribution au serveur de gestion de données par le biais d'un réseau (178) ;
- en réponse à la réception de la demande d'autorisation, la demande (608, 424) d'un jeton d'autorisation par le serveur de gestion de données de chacun des nombreux services de stockage identifiés dans le plan de distribution et la transmission (610) des jetons d'autorisation (428) générés par les services de stockage identifiés en réponse à la demande et reçus par ceux-ci par le serveur de gestion de données au système informatique d'utilisateur ; et
- le stockage (612) des fragments de donnée générés dans les supports de stockage (SM2, SM4 à SM6) des services de stockage identifiés par le biais du réseau au moyen de l'information d'autorisation par les jeton d'autorisation moyennant le contournement du serveur de gestion de données par le système informatique d'utilisateur de sorte que le serveur de gestion de données n'a aucun accès au contenu des fragments de donnée transmis ;
où des métadonnées (312), qui permettent la reconstruction de la donnée (101) à partir des fragments de donnée stockés, sont stockées dans le système informatique d'utilisateur et/ou dans le serveur de gestion de données et sont sécurisées vis-à-vis d'un accès des services de stockage.

2. Procédé selon la revendication 1, comprenant :
- la mise au point d'une configuration (175) qui contient les demandes (308) d'un utilisateur (102) concernant la vitesse, la position géographique, la sécurité et/ou le coût d'une infrastructure IT à utiliser pour le stockage de données, ainsi que des demandes concernant la disponibilité des données à stocker ;
- la mise au point d'un catalogue de services de stockage (329), qui comprend une multiplicité de services de stockage (SD1 à SD6) étant mis à disposition, où la spécification de chacun des services de stockage contient des informations au sujet de la vitesse, de la position géographique, de la sécurité et/ou du coût pour l'infrastructure IT (180 à 192) utilisée pour le stockage des données du service de stockage ;
- afin de générer le plan de distribution (416), une évaluation automatique de la configuration et du catalogue des services de stockage afin d'identifier un procédé de correction d'erreurs à partir d'une multiplicité de procédés de correction d'erreurs en fonction des services de stockage disponibles et en fonction des demandes (308) de l'utilisateur, procédé qui suffit aux demandes concernant la disponibilité des données à stocker et afin d'identifier les multiples services de stockage identifiés dans le plan de distribution à partir de la multiplicité des services de stockage mis à disposition qui sont appropriés pour le stockage de la donnée selon les demandes spécifiques à l'utilisateur concernant la vitesse, la position géographique, la sécurité et/ou le coût de l'infrastructure IT à utiliser pour le stockage de données ;
- l'utilisation du procédé de correction d'erreurs identifié en tant que procédé de correction d'erreurs du plan de distribution.

3. Procédé selon l'une des revendications précédentes, comprenant en outre :
- la génération de métadonnées (312) par le système informatique d'utilisateur (104), où le système informatique d'utilisateur est associé à un utilisateur (102), où les métadonnées contiennent :
• des chemins (432) vers tous les lieux de stockage dans les supports de stockage des services de stockage dans lesquels les fragments de données de la donnée doivent être stockés ou ont déjà été stockés ; et/ou
• une clé symétrique qui permet un déchiffrement du fragment de donnée chiffré avec cette clé symétrique ; et/ou
• une valeur de hachage du fragment de donnée calculée par le système informatique d'utilisateur pour chacun des fragments de donnée ; et/ou
• le nom de donnée d'origine de la donnée (101) stockée distribuée ; et/ou
• des données de configuration du procédé de correction d'erreurs (FKV) ;
• une mise en correspondance du nom de donnée d'origine avec les valeurs de hachage et les chemins des fragments de donnée générés ;
- le stockage des métadonnées dans le système informatique d'utilisateur ;
- la transmission des métadonnées au serveur de gestion de données ; et
- l'utilisation des métadonnées par le serveur de gestion de données pour la commande de l'accès d'un nouvel utilisateur (160) à la donnée.

4. Procédé selon la revendication 3,
- dans lequel des métadonnées d'une multiplicité de données stockées distribuées dans les services de stockage sont stockées dans le système informatique d'utilisateur et où le procédé comprend une utilisation desdites métadonnées par une application client (108) de l'ordinateur d'utilisateur pour la génération d'une vue sur la base client des données stockées distribuées ; et/ou
- dans lequel des métadonnées d'une multiplicité de données stockées distribuées dans les services de stockage sont stockées dans le serveur de gestion de données et où le procédé comprend une utilisation desdites métadonnées par un portail web (304) hôte du serveur de gestion de données pour la génération d'une vue sur la base d'un réseau des données stockées distribuées ;
dans lequel la vue sur la base client et/ou sur la base d'un réseau sont configurées pour reconstruire de manière dynamique les noms de données d'origine à partir des métadonnées et, par la sélection d'une des données stockées distribuées, pour initier une reconstruction dynamique et automatique du contenu de donnée de la donnée sélectionnée par le système informatique d'utilisateur ou par un autre système informatique d'utilisateur autorisé, où les services de stockage dans lesquels sont stockés des fragments de la donnée sélectionnée, sont cachés par la vue.

5. Procédé selon l'une des revendications 2 à 4,
- dans lequel la détermination du procédé de correction d'erreurs, laquelle suffit aux demandes de l'utilisateur en ce qui concerne la disponibilité de la donnée, contient une évaluation de la taille globale à attendre de tous les fragments de donnée (F1 à F4) à générer par le procédé de correction d'erreurs, où, pour chacun des fragments de donnée à générer, il est identifié un service de stockage, lequel suffit selon ses indications aux demandes concernant la vitesse, la position géographique, la sécurité et/ou le coût, moyennant la prise en compte de la taille globale à attendre ; et/ou
- dans lequel, dans le cas où le procédé de correction d'erreurs déterminé activerait la génération de fragments de donnée dont la taille globale ne le permet pas, pour identifier un nombre de services de stockage y ayant accès, qui, selon leurs indications, suffisent aux demandes concernant la vitesse, la sécurité et/ou le coût en tenant compte de la taille globale, une détermination d'un nouveau procédé de correction d'erreurs a lieu automatiquement, lequel est configuré pour générer des fragments de donnée dont la taille globale à attendre est suffisamment petite de sorte que, pour chacun des fragment de donnée à générer, il peut être identifié un service de stockage, lequel suffit, selon ses indications, aux demandes concernant la vitesse, la position géographique, la sécurité et/ou le coût, moyennant la prise en compte de la taille globale à attendre ; et/ou
- dans lequel, afin de satisfaire à des demandes de l'utilisateur en ce qui concerne une durée maximale du transfert de données pour la transmission de la donnée par le biais du réseau, le procédé de correction d'erreurs déterminé est configuré automatiquement de sorte que, par ceci, un nombre suffisamment grand de fragments de donnée générés est généré, de sorte que, pour une transmission en parallèle de ces fragments de donnée en direction ou en provenance des services de stockage identifiés dans le plan de distribution, le temps de transmission se situe en-dessous d'une durée maximale pour tous les fragments de donnée.

6. Procédé selon l'une des revendications précédentes, comprenant en outre :
- le calcul d'une valeur de hachage de la donnée globale par le système informatique d'utilisateur ;
- le chiffrement de chacun des fragments de donnée (F1 à F4) de la donnée (101) par le système informatique d'utilisateur, où la valeur de hachage est employée en tant que clé symétrique pour le chiffrement des fragments de donnée par le système informatique d'utilisateur ;
- la génération de métadonnées, où les métadonnées contiennent la valeur de hachage de la donnée entière calculée et des valeurs de hachage des fragments de donnée, par le système informatique d'utilisateur ;
- le chiffrement des métadonnées générées qui contiennent la clé symétrique, ou au moins de la clé symétrique, par une clé publique (136, 170), qui est associée au système informatique d'utilisateur (104) d'un utilisateur (102) ou à un autre système informatique d'utilisateur (108) d'un autre utilisateur (160) qui est autorisé pour un accès à la donnée, où une clé privée (138, 170) forme une paire de clés cryptographiques asymétrique avec la clé publique (136, 170), où la clé publique (136, 170) est stockée couplée dans le serveur de gestion de données avec un profil d'utilisateur (176, 78) de l'utilisateur auquel est associée la clé publique ; et
dans lequel les fragments de donnée sont stockés sous forme chiffrée dans les supports de stockage des services de stockage identifiés.

7. Procédé selon l'une des revendications précédentes, dans lequel le serveur de gestion de données gère une clé publique (170) d'un nouveau système informatique d'utilisateur (168) d'un nouvel utilisateur (160), comprenant en outre :
- l'authentification (504) du nouvel utilisateur (160) vis-à-vis du serveur de gestion de données (130) ;
- après une authentification réussie, la vérification, par le serveur de gestion de données, si le nouvel utilisateur (160) est autorisé à l'accès en lecture de la donnée (101) ;
- dans le cas où l'analyse a pour résultat que le nouvel utilisateur (160) est autorisé pour l'accès en lecture et s'est authentifié avec succès, la génération (508) d'une nouvelle version des métadonnées (312), où la nouvelle version des métadonnées (312) permet une reconstruction de la donnée (101) à partir des fragments de donnée (F1 à F4) et est générée spécifiquement pour le nouveau système informatique d'utilisateur (168), où la génération de la nouvelle version des métadonnées de la donnée (101) contient :
• l'envoi, par le serveur de gestion de données, de la clé publique (170) du nouveau système informatique d'utilisateur (168) au système informatique d'utilisateur (104) lequel a généré la donnée et a chiffré ses fragments avec sa clé symétrique ;
• le chiffrement de la clé symétrique avec la clé publique (170) du nouveau système informatique d'utilisateur (168) par le système informatique d'utilisateur (104) qui a généré la donnée ;
• la combinaison de la clé symétrique chiffrée avec de nouvelles données par le système informatique d'utilisateur (104), qui a généré la donnée afin d'établir la nouvelle version des métadonnées ;
• l'envoi de la nouvelle version des métadonnées au serveur de gestion de données ;
• la transmission de la nouvelle version des métadonnées par le serveur de gestion de données au nouveau système informatique d'utilisateur (168) afin de permettre au nouveau système informatique d'utilisateur de procéder à un déchiffrement de la clé symétrique avec sa clé privée (172), qui forme une paire de clés asymétrique avec la clé publique (170).

8. Procédé selon l'une des revendications précédentes, comprenant en outre :
- l'authentification du système informatique d'utilisateur vis-à-vis du serveur de gestion de données ;
- suite à la réception de la demande d'autorisation du système informatique d'utilisateur (104) pour le stockage des fragments de donnée, la vérification, par le serveur de gestion de données, si l'utilisateur auquel est associé le système informatique d'utilisateur possède des droits d'accès pour le stockage de la donnée au moyen des services de stockage identifiés ;
où la demande du jeton d'autorisation par le serveur de gestion de données n'a lieu qu'après une authentification réussie et uniquement si l'utilisateur possède des droits d'accès.

9. Procédé selon l'une des revendications précédentes, dans lequel une clé de signature (334) est gérée par le serveur de gestion de données sous forme stockée sécurisée, comprenant en outre :
- la mise à disposition d'une clé de signature à chacun des services de stockage, la clé de signature étant prévue pour la vérification des signatures générées par la clé de signature ;
- la signature des jetons d'autorisation reçus par chacun des services de stockage identifiés avec la clé de signature par le serveur de gestion de données, où les jetons d'autorisation sont transmis sous forme signée au système informatique d'utilisateur,
où chacun des jetons d'autorisation (432) signés permet à un récepteur (105) de ce jeton d'autorisation signé d'avoir un accès à un lieu de stockage identifié par le jeton d'autorisation sur le support de stockage du service de stockage respectif uniquement si le service de stockage respectif reconnaît la signature comme étant valide.

10. Procédé selon l'une des revendications précédentes, comprenant en outre :
- la réception d'une demande d'accès d'un nouveau système informatique d'utilisateur (168) pour l'accès à la donnée stockée distribuée, la demande d'accès étant reçue par le serveur de gestion de données ;
- l'identification des services de stockage (SD2, SD4 à SD6), qui ont stocké des fragments de données (F1 à F4) de la donnée à l'aide des métadonnées (312) de la donnée par le serveur de gestion de données ;
- la vérification, par le serveur de gestion de données, si un nouvel utilisateur (160) auquel est associé un nouveau système informatique d'utilisateur, possède des droits d'accès pour le type d'accès demandé sur la donnée ;
- l'authentification (504) du nouveau système informatique d'utilisateur vis-à-vis du serveur de gestion de données ;
- après l'authentification réussie et dans le cas où le nouvel utilisateur (160) possède les droits d'accès à la donnée, la demande (514) d'un nouveau jeton d'autorisation par le serveur de gestion de donnée par chacun des services de stockage identifiés et la transmission (522) de la réponse à cette demande de nouveau jeton d'autorisation reçue, par le serveur de gestion de données, au nouveau système informatique d'utilisateur, où les nouveaux jetons d'autorisation permettent au nouveau système informatique d'utilisateur l'accès demandé sous une forme directe aux fragments de donnée stockés respectivement par les services de stockage.

11. Procédé selon la revendication 10,
- dans lequel la configuration (175) de l'utilisateur (102) contient une information (316) sur un type d'ordinateurs, lequel est seul habilité à avoir accès à des données que l'utilisateur a stockées dans les supports de stockage des services identifiés ; et
- dans lequel la demande du nouveau jeton d'autorisation n'est envoyée du serveur de gestion de données vers les services de stockage identifiés que si, dans le cas où le nouveau système informatique d'utilisateur (168) à partir duquel le nouvel utilisateur (160) a envoyé la demande d'accès au serveur de gestion de données, l'information (316) répond uniquement à ce type d'ordinateur habilité.

12. Procédé selon l'une des revendications 10 ou 11, en outre avec :
- la gestion d'un profil d'utilisateur (176) du nouvel utilisateur (160) par le serveur de gestion de données, où le profil d'utilisateur contient une clé publique (170) qui forme une paire de clés asymétrique conjointement avec une clé de déchiffrement privée (172), où la clé de déchiffrement privée est stockée sécurisée dans le système informatique d'utilisateur (168) et sert pour le déchiffrement des métadonnées de la donnée ou pour le déchiffrement de parties des métadonnées ; et
- dans le cas où le nouvel utilisateur s'est authentifié avec succès vis-à-vis du serveur de gestion de données et dans le cas où le nouvel utilisateur possède les droits d'accès pour la donnée, l'envoi de la clé publique (170) par le serveur de gestion de données au système informatique d'utilisateur (104) pour le déchiffrement des métadonnées ou de parties des métadonnées par le système informatique d'utilisateur (104), et la réception, et la transmission des métadonnées de la donnée chiffrées totalement ou partiellement avec la clé publique (170) envoyée par le serveur de gestion de données au nouveau système informatique d'utilisateur (168) afin de permettre au nouveau système informatique d'utilisateur de procéder à un déchiffrement des métadonnées transmises avec la clé de déchiffrement privée (172) et une reconstruction de la donnée à partir des fragments de donnée.

13. Support de stockage (106, 302) lisible par ordinateur doté d'instructions lisibles par ordinateur, lesquelles font en sorte que, lors de l'exécution par un processeur (342), le processeur exécute le procédé selon l'une des revendications précédentes.

14. Système informatique d'utilisateur (104, 162, 168) comprenant un processeur (135), une interface de réseau (132.2) pour un couplage opérationnel du système informatique d'utilisateur à une multiplicité de services de stockage (SD1 à SD6) et à un serveur de gestion de données (130) par le biais d'un réseau (178), où le système informatique d'utilisateur comprend un support de stockage (106) doté d'une application client (108) exécutable par le processeur, où l'application client pour l'exécution du procédé suivant en vue du stockage d'une donnée est configurée pour :
- l'emploi d'un plan de distribution (416) qui contient des instructions pour la génération de fragments de donnée (F1 à F4) de la donnée (101) au moyen d'un procédé de correction d'erreurs (FKV) et d'identificateurs de plusieurs services de stockage (SD2, SD2 à SD6), dans les supports de stockage non volatils desquels les fragments de donnée générés doivent être stockés, le serveur de gestion de données ne procédant à aucun service de stockage ;
- l'exécution (604) du procédé de correction d'erreurs précisé dans le plan de distribution pour la génération des fragments de donnée de la donnée, où au moins un des fragments de donnée contient des bits de correction d'erreurs ;
- l'envoi (606) d'une demande d'autorisation du système informatique d'utilisateur pour le stockage des fragments de donnée dans les services de stockage identifiés dans le plan de distribution au serveur de gestion de données par le biais du réseau (178) ;
- en réponse à l'envoi de la demande d'autorisation, la réception de jetons d'autorisation générés par les services de stockage identifiés à partir des services de stockage identifiés au serveur de gestion de données pour chacun des services de stockage identifiés dans le plan de distribution ; et
- le stockage (612) des fragments de donnée générés dans les supports de stockage des services de stockage identifiés par le biais du réseau au moyen de l'information d'autorisation par les jetons d'autorisation moyennant le contournement du serveur de gestion de données par le système informatique d'utilisateur de sorte que le serveur de gestion de données n'a aucun accès au contenu des fragments de donnée transmis, où des métadonnées (312) qui permettent la reconstruction de la donnée à partir des fragments de donnée stockés, sont sécurisées vis-à-vis d'un accès des services de stockage.

15. Serveur de gestion de données (130) comprenant un processeur (342), une interface de réseau (132.1) pour le couplage opérationnel du serveur de gestion de données avec au moins un système informatique d'utilisateur (104, 162, 168) et avec une multiplicité de services de stockage (SD1 à SD6) par le biais d'un réseau (178), où le serveur de gestion de données comprend un support de stockage (302) doté d'une application de gestion de données (304) exécutable par le processeur, où l'application de gestion de données pour l'exécution du procédé suivant pour le stockage d'une donnée (101) est configurée pour :
- la réception d'une demande d'autorisation (420) du système informatique d'utilisateur pour le stockage de fragments de donnée (F1 à F4) de la donnée (101) par le biais du réseau dans plusieurs parmi les services de stockage (SD2, SD4 à SD6), où le serveur de gestion de données ne met aucun service de stockage à disposition, de sorte que le serveur de gestion de données n'a aucun accès au contenu des fragments de donnée transmis ; et
- en réponse à la réception de la demande d'autorisation, la demande (608) d'un jeton d'autorisation de chacun parmi les nombreux services de stockage et la transmission (610) des jetons d'autorisation générés en réponse à la demande (608) par les services de stockage identifiés dans le plan de distribution et reçus par ceux-ci au système informatique d'utilisateur, où des métadonnées (312) qui permettent la reconstruction de la donnée à partir des fragments de donnée stockés sont sécurisées vis-à-vis d'un accès des services de stockage.
